# EUROPÄISCHE PATENTSCHRIFT

(11) **EP 3 271 227 B1**
(45) Veröffentlichungstag und Bekanntmachung des Hinweises auf die Patenterteilung: **20.10.2021**
(21) Anmeldenummer: 15817422.7
(22) Anmeldetag: 30.12.2015
(51) Int. Cl.: B60T 13/68, B60T 8/40, B60T 13/74

(54) **BREMSANLAGE MIT SCHWIMMKOLBEN-HAUPTBREMSZYLINDEREINHEIT MIT NEUARTIGER MUX-REGELUNG (MUX 2.0) MIT MINDESTENS EINEM AUSLASSVENTIL UND VERFAHREN ZUR DRUCKREGELUNG**
BRAKE SYSTEM WITH FLOATING PISTON-MASTER BRAKE CYLINDER UNIT WITH A NEW TYPE OF MUX CONTROL (MUX 2.0), HAVING AT LEAST ONE OUTLET VALVE, AND METHOD FOR CONTROLLING PRESSURE
SYSTÈME DE FREINAGE ÉQUIPÉ D'UNE UNITÉ À MAÎTRE-CYLINDRE DE FREIN À RÉGULATION MUX INNOVANTE (MUX 2.0) COMPRENANT AU MOINS UNE SOUPAPE DE SORTIE, ET PROCÉDÉ SERVANT À LA RÉGULATION DE PRESSION

(30) Priorität: 16.03.2015 DE 202015107072 U; 16.03.2015 DE 202015107075 U; 16.03.2015 DE 202015107079 U; 21.04.2015 DE 202015107081 U
(43) Veröffentlichungstag der Anmeldung: 24.01.2018
(73) Patentinhaber: IPGATE AG, 8808 Pfäffikon SZ (CH)
(72) Erfinder: LEIBER, Heinz, 71739 Oberriexingen (DE); LEIBER, Thomas, 81675 München (DE); KÖGLSPERGER, Christian, 82538 Geretsried (DE)
(74) Vertreter: Lenzing Gerber Stute
(86) Internationale Anmeldenummer: PCT/EP2015/081401
(87) Internationale Veröffentlichungsnummer: WO 2016/146222

(56) Entgegenhaltungen:
- DE-A1-102011 077 329
- DE-A1-102011 118 365
- DE-A1-102012 002 791
- US-A1- 2014 333 124
- US-A1- 2015 069 828

## Beschreibung

Die Erfindung betrifft eine Betätigungsanlage für zumindest eine hydraulisch betätigbare Einrichtung, insbesondere Fahrzeugbremsanlage, nach dem Oberbegriff des Patentanspruches 1.

### Stand der Technik

Aus WO2006/111392A1 und WO2010/091883 A1 sind Bremsanlagen bekannt, bei denen im ABS-Betrieb der Druck in den Radbremsen zeitgleich oder in einem geschlossenen Multiplexverfahren nacheinander eingestellt wird. Dies erfolgt über ein Schaltventil sowie über die Wegvorsteuerung eines positionsgeregelten Kolbens zum Druckauf- und Druckabbau unter Berücksichtigung der Druckvolumenkennlinie jeder einzelnen Radbremse. Vorzugsweise werden Schaltventile mit geringem Strömungswiderstand in der hydraulischen Verbindung zur Radbremse eingesetzt. Der Druck kann dabei sequentiell oder simultan oder teilsimultan in einem oder mehreren Radbremsen verändert werden. Zur Steuerung wird ein Drucksensor verwendet, der den Druck an einer Stelle in der hydraulischen Verbindung zwischen Kolben-Zylinder-Einheit und Radbremsen misst. In einer bevorzugten Ausführung ist er nahe der Druckerzeugenden Kolben-Zylinder-Einheit angebracht. Dieses Verfahren wird im weiteren als MUX-Verfahren bezeichnet.

Vorteil dieses MUX-Verfahrens ist die sehr präzise Druckregelung, insbesondere bei niedrigen Reibwerten und bei Rekuperation/Blending. Zudem kann der Aufwand an Ventilen deutlich reduziert werden, da anstatt je einem Einlass- und je einem Auslassventil pro Radbremse nur ein Schaltventil benötigt wird. Nachteilig bei den aus diesen beiden Dokumenten bekannten Bremsanlagen sind die hohen Anforderungen an den Elektromotor. So muss dieser u.a. eine geringe Trägheitsmasse sowie ein hohes Drehmoment für Reversierbetrieb aufweisen.

Aus DE 10 2012 002 791 A1 ist eine Bremsanlage vorbekannt, dessen Grundaufbau mit Hauptbremszylinder und Trennventilen im Markt als MKC1, wie beispielweise in DE 10 2013 224 313 A1 ausgeführt, bekannt ist. Der Multiplexbetrieb ist bei diesem Bremssystem derart gestaltet, dass sowohl Hauptbremszylinder als auch Druckversorgereinheit jeweils über Trennventile mit den Bremskreisen verbunden sind.

Vorteil dieser Anordnung ist der modulare Aufbau und der Einsatz von Standardkomponenten (Hauptbremszylinder), sowie der Einsatz einer Druckversorgereinheit, die als Modul montiert werden kann. In dieser Anordnung kommt es zu keinen Differenzdrücken in den Bremskreisen, da die Druckversorgereinheit über gleiche Trennventile mit den Bremskreisen verbunden ist. Eine Zwischenschaltung eines Kolbens zur Medientrennung ist hier nicht vorhanden. Daher kommt es zu keinen Differenzdrücken zwischen den beiden Bremskreisen. Nachteilig ist jedoch der hohe Aufwand an Komponenten. So wird u.a. eine große Anzahl von Ventilen, ein aufwendiger Hauptbremszylinder mit zwei Kammern und ein Simulator benötigt. Das System leidet unter einer kritischen Fehlersicherheit des Hauptbremszylinders, insbesondere aufgrund der fehlerkritischen Gestaltung des Wegsimulators und der Tatsache, dass der Schwimmkolben sich bei Pedalbetätigung nur geringfügig bewegt.

Eine fehlersichere Ausführung des Hauptbremszylinder sieht entsprechende Ventilschaltungen für den Wegsimulator (Abschaltung in Rückfallebene, Funktionsventile, Einspeisung bei Rückfallebene) sowie Trennventile zu den Bremskreisen zur Entkoppelung des Pedals im Brake-by-Wire-Betrieb vor. Hier wird auf DE 10 2010 081463 A1 , DE 10 2013 224 313 A1, WO 2012/034661 und DE 10 2013 216 477 A1 verwiesen. Insbesondere die Hauptbremszylinderausführung in WO 2012/034661 zeichnet sich durch sehr gute Fehlersicherheit und kurze Pedalwege bei Systemausfall aus. Die vorteilhafte Ausführung mit drei hydraulischen Kammern (Druckkolbenkammer, Schwimmkolbenkammer, Hilfskolbenkammer) ist in WO 2012/034661 detailliert beschrieben und wurde durch DE 10 2013 216 477 weitestgehend übernommen. Nachteilig des Drei-Kammer-Systems ist die hohe Aufwand und in serieller Anordnung die ungünstige Baulänge.

DE 102011118365 A1 beschreibt ebenfalls eine elektronisch regelbare Bremsvorrichtung mit zumindest zwei parallel angeordneten Kolben-Zylinder-Einheiten und einem Vorratsbehälter, die über Ventile und Hydraulikleitungen mit Radbremsen verbunden sind, wobei zudem eine Verstärkereinrichtung vorgesehen ist. Dabei ist eine elektrisch ansteuerbare Ventileinrichtung zwischen den den Kolben-Zylinder-Einheiten zugeordneten Bremskreisen vorgesehen, um den geregelten Übergang von Hydraulikflüssigkeit zwischen den Bremskreisen (Bypass) und dem Vorratsbehälter zu ermöglichen.

DE 2014120218271700 A1 beschreibt eine Erweiterung für das MKC1-Bremssystem mit MUX-Regelung, welches aus DE 10 2012 002 791 A1 vorbekannt ist. Die Erweiterung umfasst eine neuartige Doppelhubkolben-Druckversorgereinheit, die eine Druckregelung im Vor- und Rückhub sowie ein Umschalten von hydraulischen Querschnittsflächen ermöglicht. Vorteil dieser Ausführung ist die kontinuierliche Förderung durch die Druckerzeugereinheit, was sich bei ABS-Betrieb und Leckagen und in Fadingfall vorteilhaft auswirkt.

### Aufgabe der Erfindung

Aufgabe der vorliegenden Erfindung ist es, eine kostengünstige und kompakte kurzbauende Bremsanlage mit hoher Fehlersicherheit und Regelgüte zu schaffen, welche mit möglichst wenigen Ventilen und Druckgebern bzw. Sensoren auskommt.

### Lösung der Aufgabe

Die Aufgabe der Erfindung wird mit einer Bremsanlage mit den Merkmalen des Patentanspruches 1 gelöst.

Vorteilhafte Ausführungen bzw. Ausgestaltungen der Erfindung ergeben sich aus den Unteransprüchen.

Mit der Erfindung wird ein Betätigungssystem geschaffen, das sich durch hohe Druckregelgüte, Freiheitsgrade in Umsetzung innovativer Rekuperationsstrategien, sowie eine Reduzierung der Anforderungen an die Antriebseinheit auszeichnet.

Dies wird mit einer kompakt bauenden Bremsanlage mit einer neuartigen Druckregelung/Drucksteuerung geschaffen, gekennzeichnet neben der Druckregelung durch eine neuartige Gestaltung der Druckerzeugereinheit (Doppelhubkolben, Stufenkolben) sowie einen einfachen Aufbau des Hauptbremszylinders mit einem Schwimmkolben mit zwei Druckräumen. Zudem ist ein fehlersicherer Wegsimulator basierend aus dem WO 2012/034661 bekannten Hilfskolbenkonzept mit Einspeisung über ein stromlos offenes Ventil in verschiedenen Varianten realisiert.

Folgende Grundideen liegen der erfindungsgemäßen Bremsanlage zugrunde:
- kurzbauende Hauptbremszylindereinheit mit einem Schwimmkolben und Hilfskolben;
- Druckaufbau im MUX-Betrieb und Druckabbau im MUX-Betrieb und/oder mit Zeitsteuerung über mindestens ein Auslassventil;
- Genauer druckgesteuerter Druckabbau mittels Druckmessung über Druckgeber über Druckversorgereinheit und Ventile, die Druckversorgereinheit mit Vorratsbehälter verbinden (Doppelhubkolben mit PD1, PD3-Ventil).
- einfacher Aufbau mit wenig Ventilen (mit geringer Drosselwirkung);
- Nutzung der Strommessung des Elektromotors für indirekte Druckmessung in einem Bremskreis, in dem kein Drucksensor angebracht ist ;
- neuartige Gestaltung der Druckerzeugereinheit in der Ausführung als Doppelhubkolben oder Stufenkolben mit Vorfülleffekt und kontrollierten Druckabbau über die Druckerzeugereinheit;
- intelligenter Einsatz des Doppelhubkolbens für Ausgestaltung einer zweikreisigen Druckversorgung;
- Gestaltung des Pedalinterfaces und des Hilfskolben-Wegsimulatorprinzips.

Der erfindungsgemäßen Bremsanlage liegt insbesondere ein neuartiges Multiplexverfahrens mit Erweiterung über Druckabbausteuerung über ein oder mehrere Auslassventil(e) zugrunde. Damit kann in einem anderen Bremskreis/Radkreis Druck über Zeitsteuerung abgebaut werden, während in einem anderen Bremskreis/ Radkreis Druck im MUX-Betrieb auf- oder abgebaut wird. Der Druckabbau erfolgt dabei über Zeitsteuerung der Auslassventile, bei der vorwiegend die vom Regler bzw. der Steuerungseinrichtung geforderte Druckänderung, der Differenzdruck und die Druckvolumenkennlinie des Radzylinders berücksichtigt wird. Damit ist der Bremskreis kurzzeitig geöffnet, was insbesondere in Extremsituationen gefordert ist (z.B. µ-Split, High µ-Bremsung). Damit kann der Multiplexer stark entlastet werden. Auch die Anforderungen an dem Motor können dadurch reduziert werden.

Der Druck kann in einem oder 2 Radkreisen individuell bei Einsatz von einem oder 2 Auslassventilen gesteuert abgebaut werden. Vorzugsweise werden die Auslassventile nur in einem Radkreis eines Bremskreises eingesetzt, insbesondere zur Vereinfachung der Regelung in diesem Bremskreis. In der gleichen Zeit kann in einem anderen Radkreis der Druck über mit MUX über Volumensteuerung mit p-V-Kennlinie kontrolliert auf- oder abgebaut werden. Dabei wird eine entsprechende Prioriätssteuerung des MUX eingesetzt. Zur Unterstützung des Verfahrens wird ein Drucksensor verwendet für die Druckbestimmung in einem Bremskreis, der Druck im anderen Bremskreis kann bei Trennung durch ein Trennventil über das bekannte Verfahren über Phasenstrommessung des Elektromotors indirekt ermittelt werden. Bei bekannter Querschnittfläche des Hauptbremszylinders, kann die Getriebeübersetzung über den proportionalen Zusammenhang zwischen Phasenstrom und Drehmoment des Elektromotors der Druck berechnet werden. Die Genauigkeit kann dadurch erhöht werden, in dem die Temperatur im Elektromotor zusätzlich bestimmt wird über einen einfachen Temperaturgeber und der nichtlineare Verlauf der Drehmomentkonstante kt mit berücksichtigt wird. Ein stillstehender Kolben ist dazu vorteilhaft, weil die Druckschätzung zusätzlich kalibriert werden kann.

Das Trennventil der Druckversorgereinheit zum Bremskreis BK I (Sicherheitsanforderung Bremssystem: Abtrennung der Druckversorgereinheit im Fehlerfall und 2-kreisiger Durchgriff des Hauptbremszylinders auf die Bremskreise) kann dadurch eingespart werden, in dem die Druckversorgung über das Schnüffelloch des Schwimmkolbens in den Druckraum DR1 zu den Einlassventilen des Bremskreises I erfolgt und in der Rückfallebene die Verbindung zur Druckversorgereinheit gesperrt wird. Dazu ist erforderlich, dass der Schwimmkolben sich im Normalbetrieb in der Endstellung mit Anschlag stehen bleibt. Daher wird der Druck der Druckerzeugereinheit in beiden Druckräumen DR1 und DR2 verändert (annähernd gleicher Druck in beiden Bremskreisen) und der Druckkolben mit einer Rückstellfeder an einen Anschlag gedrückt. Das System ist sinnvollerweise so zu betreiben, dass der Druck im Druckraum DR1 mindestens so groß ist wie der Druck im Druckraum DR2, zusätzlich unterstützt eine Rückstellfeder, dass keine Bewegung stattfindet auch bei Druckschwingungen. Kommt es beim Druckabbau zu einem Schließvorgang des Schnüffellochs muss der Druckabbau im DR1 durch Öffnen des Trennventils und Rückfahren des Plungers unterstützt werden. Es sind Diagnoseverfahren möglich, welche die Dichtigkeit der Druckkolbendichtungen überprüfen. Dies kann erzielt werden indem gezielt eine Druckdifferenz eingestellt wird (z.B. verzögerter Druckaufbau, gezielter Druckabbau mit Differenzdrücken). Dies soll vorzugsweise im Fahrzeugstillstand erfolgen.

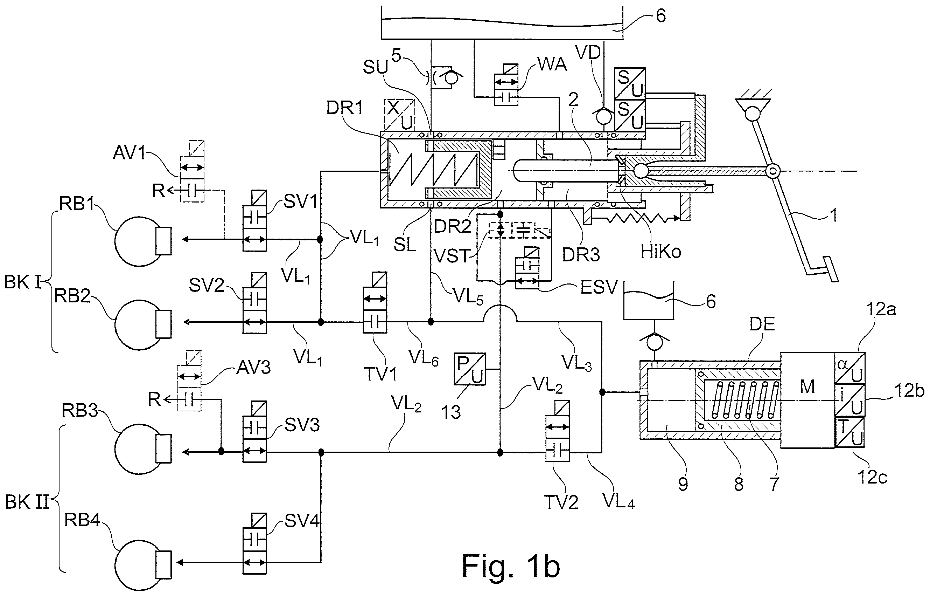

Eine sinnvolle Erweiterung ist die direkte Verbindung der Druckerzeugereinheit mit den über ein Trennventil/ Diagnoseventil (TV1, Fig. 1b) zu beiden Einlassventilen des Bremskreises oder je einem Trennventil je Radbremse. Sinnvoll ist auch eine Kombination, d.h. direkte Verbindung der Druckversorgung mit dem Hauptbremszylinder (DR1) und zusätzliche Verbindung mit den Schaltventilen mit einem Trennventil (Fig.1b). Dies hat zusätzliche Sicherheitsvorteile. Zum einen kann in der Rückfallebene sicher die Druckversorgereinheit vom Bremskreis getrennt werden, zudem kann leichter eine Diagnose des Hauptbremszylinders durchgeführt werden. So ist es wichtig, dass die Dichtungen im Hauptbremszylinder und die Beweglichkeit des Druckkolbens in regelmäßigen Abständen bei Stillstand überprüft werden. Durch die direkte Druckeinspeisung in den zweiten Druckraum DR1 bzw. vorzugsweise zusätzliche Einspeisung über ein Trennventil TV zwischen Druckerzeugereinheit und Schaltventilen, kann das System im Vergleich zum System gemäß Stand der Technik mit Trennventilen zwischen der Druckversorgereinheit und den Radbremsen (siehe DE 10 2013 224 313 A1) in der Drosselwirkung signifikant reduziert werden bzw. es können großflächige Trennventile eingespart werden. Daher wird mindestens der erste BK I im Multiplexbetrieb (Druckaufbau und Druckabbau primär über Wegsteuerung des Kolbens der Druckerzeugereinheit über die Druckvolumenkennlinie) betrieben, der geringe Drosselwiederstände zu den Bremskreisen erfordert. Dies ist insbesondere beim Einsatz von Verbrauchern mit großem Volumen (z.B. Vorderachse bei Schwarz-Weiß-Aufteilung) hilfreich.

Der MUX-Betrieb ermöglicht den Einsatz von speziellen Schaltventilen mit großem Querschnitt, da vorwiegend die Volumensteuerung für die Drucksteuerung eingesetzt wird und daher kleinere Anforderungen an Ventile hat im Vergleich zu Ventilen, die in Zeitsteuerung betrieben werden. Die Zeitsteuerung bei konventionellen Systemen erfordert bei hoher Druckdifferenz und Begrenzung der Durchflussmengen nur kleine Ventilquerschnitte, da die Ventiltoleranzen zu große Abweichungen in den Druckamplituden bedingen.

Es sind Ventile an den Radbremsen (Schaltventile, Auslassventile) mit spezieller Durchströmung vorgesehen. Damit kann der Multiplexbetrieb sehr effektiv und kostengünstig umgesetzt werden und die großen Vorteile der Druckregelgenauigkeit insbesondere bei Niedrigreibwert, völlig flexibler Rekuperation und Betrieb bei Bremskraftverstärkung im Normalbetrieb ohne hohe Mehrkosten genutzt werden. Für einen reinen Multiplexbetrieb ist zur Abdeckung von Grenzfällen die Dynamikanforderung an den Elektromotor der Druckerzeugereinheit sehr hoch. Dies führt zu einem hohen Drehmomentbedarf bei Betrieb von 4 Radbremszylindern. Die in der Erfindung vorgesehenen Auslassventile und der zeitweise Druckabbau in den Vorratsbehälter entlasten den Motor insbesondere in Extremsituation. Dies führt insbesondere bei Bremsungen bei Hochreibwert zu kürzeren Bremswegen bzw. entlastet den Reversierbetrieb der Druckerzeugereinheit und ermöglichte den Einsatz eines Motors mit geringem Drehmoment und somit geringeren Kosten.

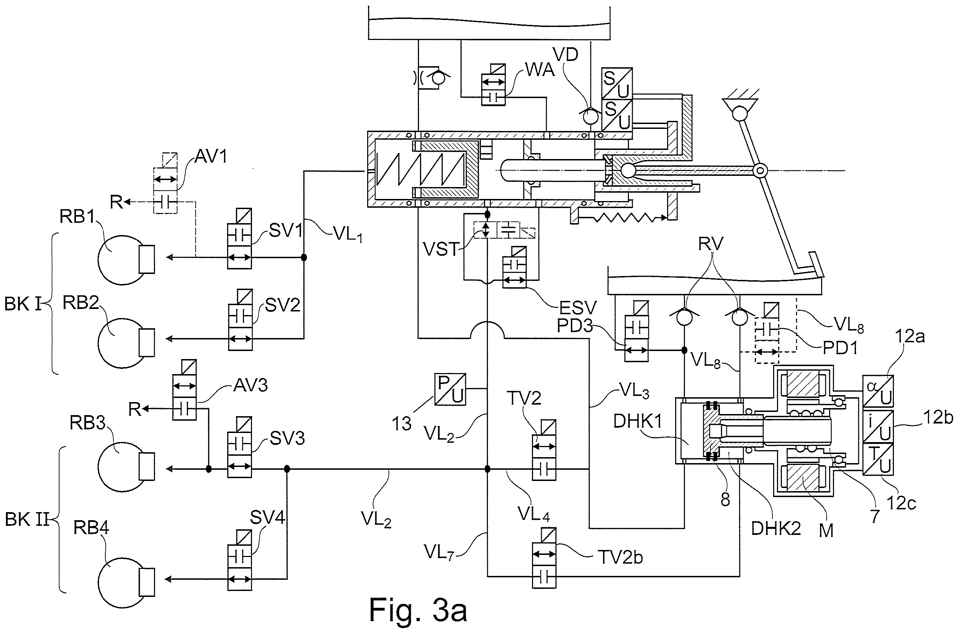

Vorteilhaft bei der erfindungsgemäßen Bremsanlage ist der Einsatz eines Stufenkolbens oder Doppelhubkolbens in der Druckerzeugereinheit, mit dem Druck im Multiplexbetrieb auf- und abgebaut werden kann. Insbesondere beim Doppelhubkolben ist der Einsatz eines Druckabbauventils (PD1 und/oder PD3 Figuren 3a-3c) sinnvoll, damit das Bremssystem zwischen Radbremse und Druckerzeugereinheit weitestgehend geschlossen betrieben werden und der Druckabbau auch bei hohen Drücken somit geräuscharm erfolgen kann. Beide Varianten haben den gleichen Effekt, dass durch Änderung der hydraulisch wirksamen Flächen der Drehmomentbedarf bei hohen Drücken reduziert wird. Gleichzeitig kann ein Vorfülleffekt erreicht werden, d.h. durch einen größeren Volumenstrom durch eine größere wirksame Fläche bei geringen Drücken kann ein sehr schnelles Anbremsen erreicht werden bzw. ein Belaglüftspiel überwunden werden.

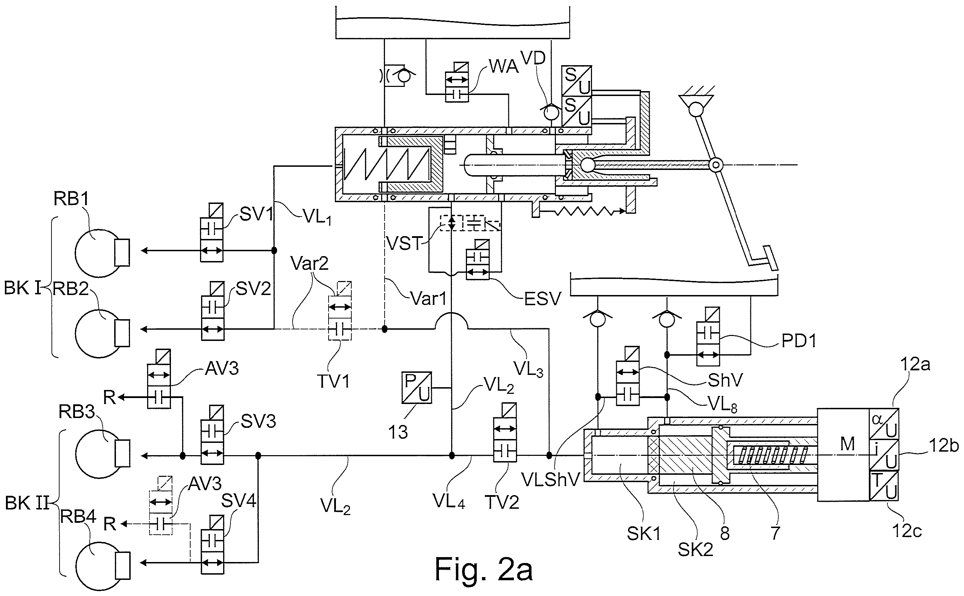

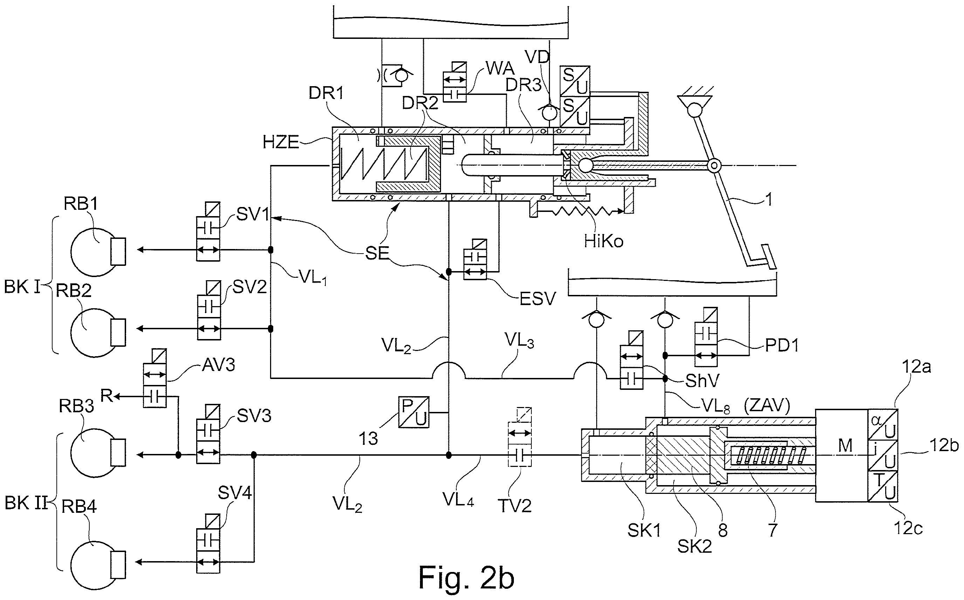

Der Stufenkolbendruckerzeuger (Figur 2a, 2b) wird durch 2 Ventile im Vergleich zum System mit Einfachhubkolben als Druckerzeuger erweitert (ShV und PD1). Wird das Ventil ShV geöffnet, wird das Volumen eines zweiten hydraulischen Kolbens in die Bremse gefördert. Beim Schließen des Ventils ShV und Öffnen eines zweiten Ventils PD1 wird das Volumen in den Vorratsbehälter abgelassen und somit wirkt nur eine hydraulische Fläche. Somit kann mit 2 weiteren Ventilen der Antriebsmotor des Systems signifikant verkleinert werden.

In der Ausführung der Druckerzeugereinheit als Doppelhubkolben (Figur 3a - Figur 3c) wird der gleiche Effekt der hydraulischen Umschaltung wie beim Stufenkolben erreicht, in dem der Doppelhubkolben im Rückhub betrieben wird. Ergänzend kann im Vorhub über ein Schalt-Ventil (ShV) oder über die Trennventile (TV2 und TV2b) die vordere und hintere Kammern des Kolbens der Druckversorgungseinrichtung verbunden werden, wodurch ein geringere hydraulische Fläche im Druckaufbau wirkt. Wird der Doppelhubkolben zurückgezogen, kann über Öffnen eines Druckabbauventils PD1 der Druck in beiden Bremskreisen abgebaut werden. Damit ist ein geräuscharmer Druckabbau möglich. Durch optimierte Ansteuerung kann das Öffnen des Trennventils auch bei hohen Differenzdrücken (Bremskreisdruck zu Druck im Doppelhubkolben) dadurch unterstützt werden, in dem der Doppelhubkolben durch Bewegung Druck aufbaut und ein Öffnen der Trennventile bei geringen Differenzdrücken ermöglicht. Dies ermöglicht ein Downsizing/Kostenreduzierung des bzw. der Trennventile (Auslegung auf hohe Durchflüsse und geringe Differenzdrücke).

Der Systemaufbau mit DHK ermöglicht auch, dass ein Bremskreis BK I direkt mit der Druckerzeugereinheit verbunden werden kann, weil im Fehlerfall durch die Bewegung des Schwimmkolbens das Schnüffelloch überfahren wird und die Druckversorgereinheit getrennt wird (Figur 3a). Der Bremskreis II wird über 2 Trennventile TV2, TV2b der Vorhubkammer und Rückhubkammer zum Bremskreis II erforderlich. Der Bremskreis BK I eignet sich somit ideal für den Multiplexbetrieb, weil die Drosselwiderstände sehr gering sind, im Bremskreis II ist mindestens ein Auslassventil zusätzlich angeordnet. Für die Multiplexregelung und den druckgesteuerten Druckabbau im BK I wird sinnvollweise die Druckberechnung aus dem Phasenstrom mit genutzt. Alternativ kann der DHK über TV1 zum BK1 und TV2 zum BK2 getrennt werden. Der Rückhub wird über ein weiteres Ventil TV2b getrennt. Diese Ausführungsform gestattet, dass sich der Schwimmkolben bewegen kann und keine Überschreitung des Schnüffellochs zu einer Abtrennung der Druckversorgung führt. Dadurch ist auch ein Betrieb zulässig, bei dem der Druck im Druckraum DR1 signifikant niedriger ist als in DR2 (z.B. Rekuperationsbetrieb). Zudem kann die Beweglichkeit des Schwimmkolbens im Betrieb einfach diagnostiziert werden.

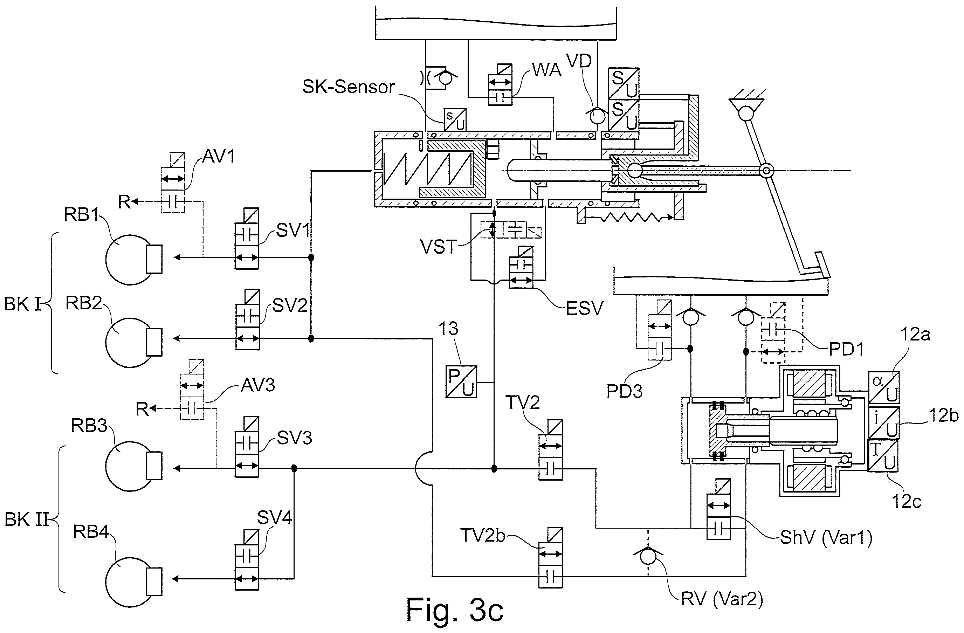

Durch den Einsatz eines Doppelhubkolbens kann die Druckversorgung zweikreisig ausgeführt werden (Figur 3c). Im Vorhub des Kolbens erfolgt die Trennung über das Trennventil TV2 zu BK II über Schwimmkolben zu BK I. Der Schwimmkolben wird im Gegensatz zu den anderen Ausführungen kontrolliert bewegt.

Der Druckaufbau erfolgt über beide Bewegungsrichtungen, da der SK-Kolben den Druck von einem Bremskreis in den anderen überträgt. Für gewisse Funktionen wie ABS erfolgt über das Bypassventil ShV ein Druckausgleich, so dass bei Volumenförderung durch den Doppelhubkolben der Schwimmkolben sich nicht mehr bewegt. Mittels Schwimmkolben-Wegsensor bzw. Positionserfassung kann durch entsprechende Ventilschaltung der SK-Kolben in einer bestimmten Position gesteuert werden, damit der Position des Schwimmkolbens in der Rückfallebene bekannt ist. Diese Ausführungsform eignet sich daher insbesondere für hohe Sicherheitsanforderungen an Zweikreisigkeit der Druckversorgung für autonomes Fahren.

Im Rückhub kann bei geschlossenem Ventil PD1 nur Druck aufgebaut werden. Dieser Betrieb wird vorzugsweise nur dann genutzt, wenn der Druck über das normale Betriebsniveau signifikant angehoben werden muss, wie es z.B. bei Fading der Fall ist.

Der Druckabbau erfolgt dann entweder über den Kolbenrückhub, den druckgeregelten Druckabbau mittels Druckmessung über den Druckgeber über die Druckversorgereinheit sowie über Ventile, die die Druckversorgereinheit (Doppelhubkolben) mit dem Vorratsbehälter verbinden (d.h. PD3, PD1) beziehungsweise über Öffnen von einem oder mehreren Auslassventilen AV. Der Druckabbau über Kolbenrückhub erfolgt dabei im normalen Bremskraftverstärkerbetrieb bis zu Drücken nahe des Blockierdrucks, der Druckabbau über PD3, PD1 bei Druckabbau aus hohen Drücken, insbesondere nach Fading bzw. am Ende von ABS-Regelvorgängen. Der Druckabbau über die Auslassventile wird primär im ABS-Betrieb, vorzugsweise bei hohen Dynamikanforderungen eingesetzt.

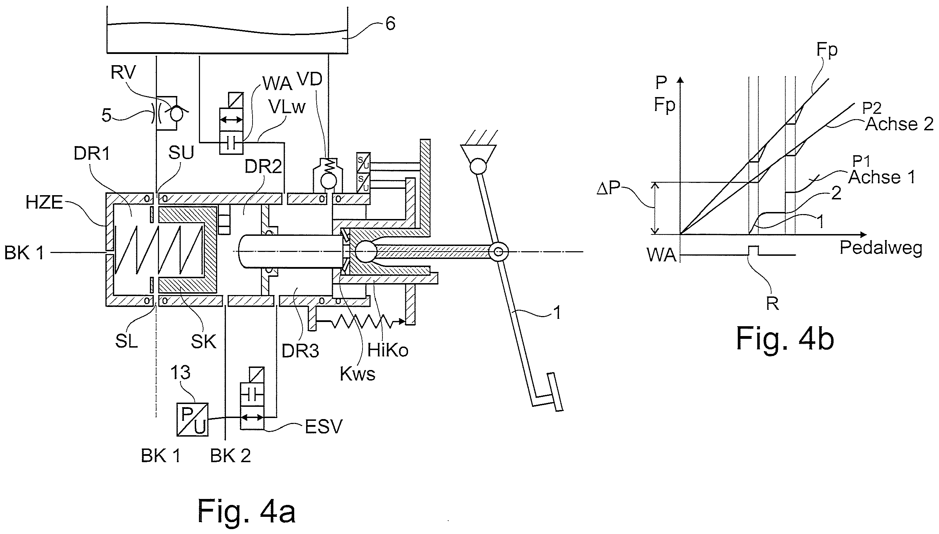

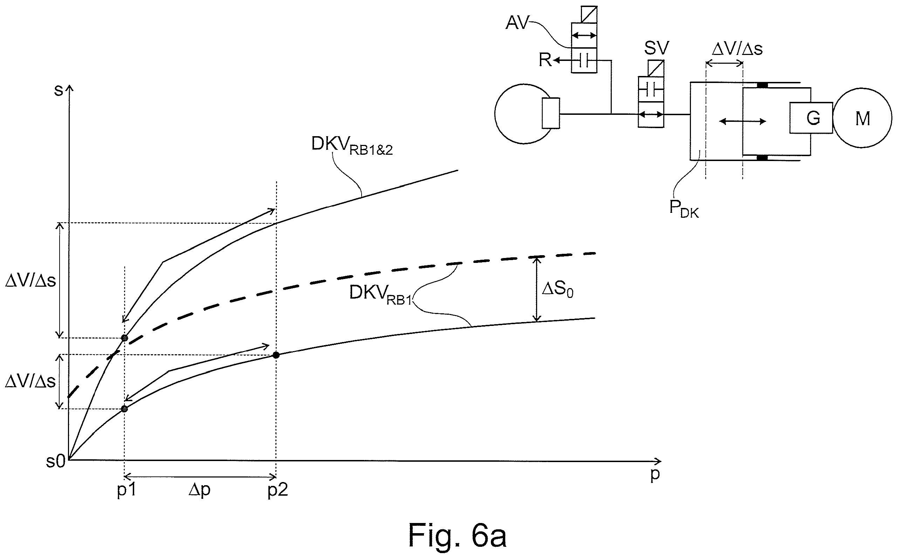

Zur Geräuschreduzierung kann der Druckabbau über den Kolben beeinflusst werden, so dass Druckschwingungen vermieden werden und ein sanftes Einschwingen auf ein Zieldruckniveau erreicht wird. Bei niedrigen Drücken bzw. zur Wegsimulatorsteuerung (Figur 4b) kann der Druck auch über eine Druckregelung im offenen Bremskreis geregelt werden, wie es in den Figuren 6a-6c beschrieben und dargestellt ist. Bei hohen Drücken sollte dieses Verfahren aus Geräuschgründen vermieden werden.

Im System wird vorzugsweise das Verfahren der Drucksteuerung über Druckvolumenkennlinie eingesetzt (Figur 6a bis Figur 6c), da gegenüber dem Stand der Technik nun auch für Betrieb bei geöffneten Auslassventilen oder Leckagen in Ventilen ausgelegt ist. Es kann zudem nur der Druck in einem Bremskreis durch Trennung über ein Trennventil aufgebaut werden, während im anderen Bremskreis ein Druckabbau erfolgt. Nach dem Druckabbau unabhängig vom Verfahren kommt es zu einem Volumenverlust, d.h. ein Weg-Offset muss für die Regelung über die Druckvolumenkennlinie nur für einen weiteren Druckaufbau/ Druckabbau berücksichtigt werden werden. Dies erfolgt durch eine Zuordnung der Druckvolumenkennlinie zu einer Wegposition über Nutzung eines Druckgebers. Insbesondere vorteilhaft für das erweiterte Verfahren der Druckregelung ist der Einsatz des Doppelhubkolbens, der eine kontinuierliche Förderung ermöglicht und auch eine Positionierung des Kolbens in die richtige Position (Vorhubendposition) für den weiteren Druckabbau im geschlossenen Bremskreis.

Die kurzbauende Hauptbremszylindereinheit wird dadurch geschaffen, in dem statt der üblichen Anordnung mit drei Kolben (WO 2012/034661) nur zwei Kolben erforderlich sind. Dies wird dadurch erreicht, in dem ein Hilfskolben sowohl den Wegsimulator bedient als auch in der Rückfallebene über ein Einspeiseventil einen Bremskreis BK1 und über einen Stößel den Druckkolben DK verschiebt und Volumen in den BK2 führt. Damit bei gleicher Fehlersicherheit der Aufbau in Vergleich zu einer Dreikolbenlösung (WO 2012/034661) deutlich vereinfacht werden. Die Fehlersicherheit wird dadurch gewährleistet, daß im Systemausfall die Einspeisung mit einem stromlos offenen Ventil (ESV) im Systemausfall sicher erfolgt und zudem über ein Druckstößel ein mechanischer Durchgriff möglich ist.

Zudem kann der Wegsimulator in einer Ausführungsform (Figur 4a und 4b) dadurch vereinfacht werden, in dem der Stößel auf den Druckraum DR2 wirkt und entsprechend des Druckes eine druckproportionale Rückwirkung erzeugt wie bei einem klassischen Bremssystem (ESP, iBooster). Dies führt zudem zu einer Pedalrückwirkung im Regelbetrieb und Fadingfall, was aus Sicht des Automobilherstellers gewünscht ist. Im Normalbetrieb wirkt der Bremsdruck auf den Pedalstößel und erzeugt eine druckproportionale Kraft auf das Bremspedal. In diesem Fall ist der Hilfskolben in der Wegsimulatoreinheit drucklos und das Volumen wird über ein WA-Ventil in den Vorratsbehälter gefördert. Das ESV-Ventil ist geschlossen.

Im ABS-Betrieb kann die Pedalcharakteristik durch Öffnen des ESV-Ventils verändert werden und durch Schließen des WA-Ventils das Pedal steif geschaltet werden. Damit ist eine andere Pedalweg-Kraft-Charakteristik einstellbar. Zudem ist eine pulsierende Rückwirkung auf das Pedal ähnlich dem heutigen ABS durch Taktung des WA-Ventils möglich.

Der Wegsimulatorkolben kann sogar komplett entfallen, wenn ein entsprechender Stößel im Durchmesser dimensioniert wird. Zudem kann in dieser Ausführungsform der Druckgeber des Bremskreises II für die Fußkraftermittlung des Fahrers genutzt werden und ein Kraft-Weg-Sensor über Differenzwegmessung entfallen.

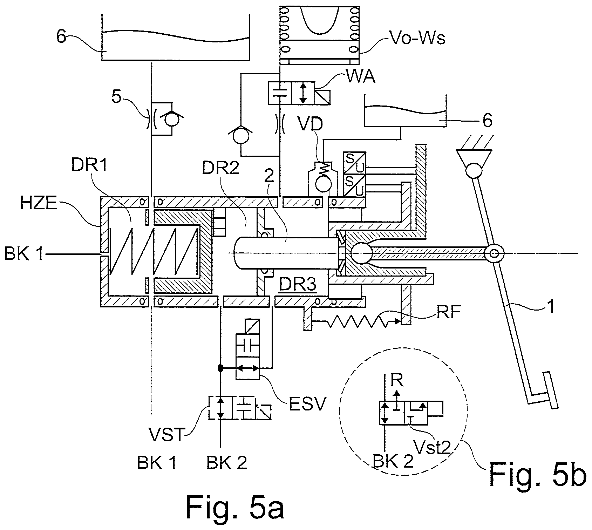

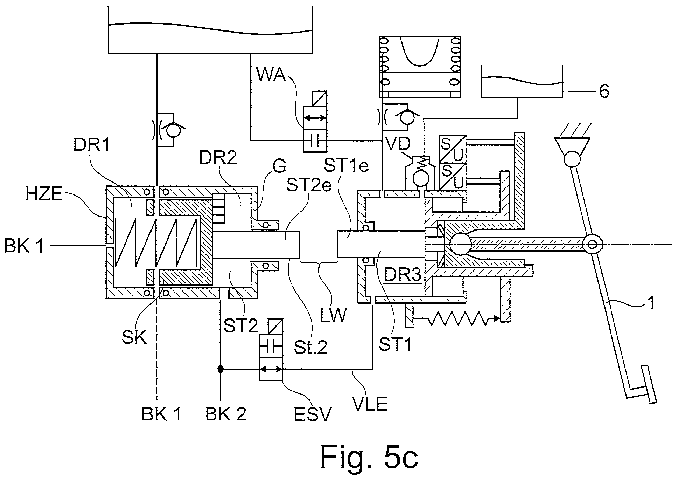

Das System mit Hilfskolben bietet zudem Möglichkeiten für eine Wegsimulatorbremsanlage mit sehr geringer oder keiner Rückwirkung. Dies ist in den Figuren 4 und Figuren 5 ausgeführt. Ein derartiges Wegsimulatorsystem ist für Fahrzeuge mit starker Rekuperationsregelung gewünscht. Eine Rückwirkung im ABS-Betrieb ist dann gering bzw. muss über PWM-Steuerung des Einspeiseventils ESV geregelt werden. Fadingzustände können damit nicht dem Fahrer rückgemeldet werden.

Unter normalem Bremskraftverstärkerbetrieb im Sinne der Erfindung wird der Betrieb der Bremsanlage verstanden, bei dem keine ABS-Funktion, ESP-Funktion, Blending oder Rekuperation durchgeführt wird.

Das System in seinen Ausführungsformen bietet somit einen Baukasten für alle Fahrzeugklassen und Fahrzeugtypen und zeichnet sich durch extrem kurze Baulänge und sehr niedrige Kosten aus.

Nachfolgend werden mögliche Ausführungsformen der erfindungsgemäßen Bremsanlage anhand von Zeichnungen näher erläutert.

Es zeigen:
- Figur 1a:: eine Ausführungsform der erfindungsgemäßen Bremsanlage mit Einfachhubkolben und Multiplexer mit mindestens 1 Auslassventil und maximal 4 Auslassventilen und Trennung Bremskreis über Schwimmkolben
- Figur 1b:: eine Ausführungsform der erfindungsgemäßen Bremsanlage mit Einfachhubkolben und Multiplexer mit Auslassventilen in einem Bremskreis und Trennung Bremskreis über Schwimmkolben und Trennventil
- Figur 1c:: eine Ausführungsform der erfindungsgemäßen Bremsanlage mit Einfachhubkolben und Multiplexer mit einem Auslassventil in einem Bremskreis und Druckabbau über Speicherkammer im geschlossenen System
- Figur 2a:: eine Ausführungsform der erfindungsgemäßen Bremsanlage mit Stufenhubkolben und Multiplexer mit einem oder zwei Auslassventilen in beiden Bremskreisen Bremskreis
- Figur 2b:: eine Ausführungsform der erfindungsgemäßen Bremsanlage mit Stufenhubkolben und Multiplexer mit einem oder zwei Auslassventilen und Verbund je einer Kammer 1 mit BK II und Kammer 2 über ShV mit BK I.
- Figur 3a:: eine Ausführungsform der erfindungsgemäßen Bremsanlage mit Doppelhubkolben (einkreisig) und Multiplexer mit Auslassventil(en) stillstehenden Schwimmkolben bei Druckaufbau und Abbau im Vorhub und Bewegung bei Umschaltung auf Druckaufbau im Rückhub
- Figur 3b:: eine Ausführungsform der erfindungsgemäßen Bremsanlage mit Doppelhubkolben (einkreisig) und Multiplexer mit Auslassventil(en) mit stillstehenden Schwimmkolben bei Druckaufbau und Abbau im Vorhub und Bewegung bei Umschaltung auf Druckaufbau im Rückhub
- Figur 3c:: eine Ausführungsform der erfindungsgemäßen Bremsanlage mit Doppelhubkolben (zweikreisig) und Multiplexer mit Auslassventil(en) mit beweglichen Schwimmkolben in Vor- und Rückhub bei Druckaufbau und Druckabbau
- Figur 4:: Stößelwegsimulator mit KWS-Steuerung, Einspeiseventil und mechanischen Durchgriff
- Figur 5a:: Stößelwegsimulator mit KWS-Steuerung, mit WegsimulatorKolben mit Einspeiseventil und mechanischen Durchgriff, Druckentkopplung über VST-Ventil
- Figur 5b:: Druckentkoppelter Wegsimulator mit Wegsimulatorkolben, mechanischen Durchgriff, Leerweg im Trockenrau und Einspeiseventil
- Figur 6a:: Druckvolumensteuerung im geschlossenen Bremskreis (AV, ZV geschlossen)
- Figur 6b:: Kontrollierte Steuerung des Druckabbaus im offenen Bremskreis
- Figur 6c:: Blockschaltbild des Reglers bei Druckregelung im geschlossenen und geöffneten Bremskreis

### Figurenbeschreibung

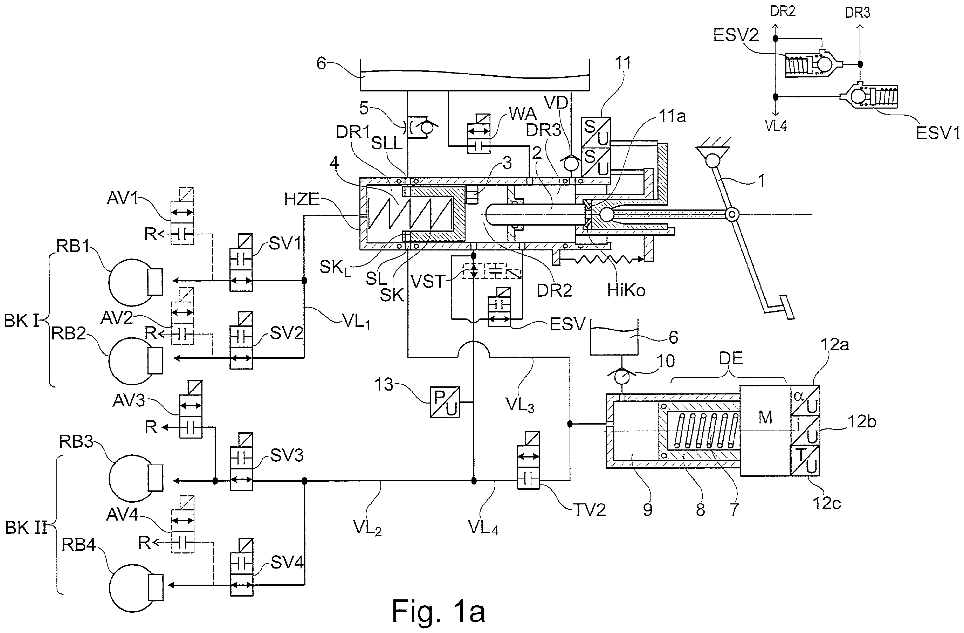

Die **Figur 1a** zeigt eine erste Ausführungsform der erfindungsgemäßen Bremsanlage mit Einfachhubkolben und erfindungsgemäßen Multiplexer dar. Das Bremspedal 1 betätigt einen Wegsimulator in einer ersten Ausführungsform gemäß Figur 4a bestehend aus einem Hilfskolben HiKo, einem Verbindungsventil WA mit Vorratsbehälter und einen Stößel 2. Der Stößel 2 ragt in einen Druckraum DR 2 eines Hauptbremszylindereinheit HZE bestehend aus einem Schwimmkolben SK, Druckräumen DR 1 und DR 2 und einen Druckkolbenanschlag 3 sowie eine Rückstellfeder 4. Der Stößel 2 ist zum Hilfskolben abgedichtet. Die Hauptbremszylindereinheit HZE ist über ein Rückschlagventil und Blende 5 mit einem Vorratsbehälter 6 verbunden. Beide Druckräume DR 1 und DR2 sind mit der Druckerzeugereinheit DE und je einem Bremskreis BK I, BK II verbunden. Druckraum DR 2 ist sowohl mit den stromlos offenen Schaltventilen SV3, SV4 mit Radbremse RB3, RB4 verbunden als auch direkt mit der Druckversorgereinheit verbunden. Druckraum DR 1 ist mit stromlos offenen Schaltventilen SV1, SV2 mit Radbremse RB1, RB2 verbunden als auch über ein Trennventil mit der Druckversorgereinheit verbunden. Zusätzlich ist

in einem Bremskreis (BK II) ein Auslassventil AV3 zwischen Radbremse und Schaltventil (SV3) angeordnet. Die Steuerung des Systems erfolgt primär nach dem im Stand der Technik beschriebenen MUX-Verfahren beim Druckaufbau und Druckabbau. Das in Figur 1a zusätzlich vorgesehene zwingend vorgesehene Auslassventil AV3 in Bremskreis 2 dient zur Entlastung des MUX-Betriebes. Damit kann der MUX-Betrieb erweitert werden um einen Druckabbau in mindestens einer Radbremse mit Auslassventil über Zeitsteuerung. Insbesondere wenn dieses Auslassventil an der Vorderachse eingesetzt ist, hat dies den Vorteil, dass ein simultaner Druckabbau an beiden Radkreisen mit entsprechender Priorität sofort erfolgen kann. Wenn ein simultaner Druckabbau nicht gefordert ist, wird der Druckabbau über die MUX-Steuerung durchgeführt. Dies hat insbesondere in Extremsituationen den Vorteil, dass der Plunger mit einer geringen Reversierdynamik betrieben werden kann und somit die Belastung des Motors (hohes Drehmoment/ Trägheitsmasse-Verhältnis) reduziert wird und eine Kosteneinsparung beim Motor möglich ist, da der Motor auf geringes Drehmoment ausgelegt werden muss. Zudem hat das neue Druckregelverfahren den erweiterten Freiheitsgrad des gleichzeitigen Druckaufbaus und Druckabbaus.

Alternativ zu nur einem Auslassventil kann an jeder Radbremse ein Auslassventil vorgesehen werden (gestrichelt gezeichnete Auslassventile AV1, AV2, AV4), d.h. das System ist wie ein klassisches ABS mit Einlassventilen (SV1-SV4) und Auslassventilen (AV1-AV4) ausgestattet. Mit dieser Konfiguration kann der Druckabbau im Regelbetrieb (z.B. ABS) über Zeitsteuerung der Auslassventile erfolgen und eine klassische ABS-Regelstrategie kann eingesetzt werden. Dies ist insbesondere bei Einführung von neuen Systemen sinnvoll, weil die klassische Regelstrategie eingesetzt werden kann und somit Softwareentwicklungskosten in der Markteinführungsphase gespart werden können. Im Bremskraftverstärkerbetrieb wird der Druck durch Wegsteuerung des Kolbens nach der Druckvolumenkennlinie geregelt sowohl im Druckaufbau als auch im Druckabbau. Auch eine Kombination der Regelung, z.B. Druckabbausteuerung im MUX-Betrieb bei jeweils geöffneten Schaltventilen SV1, SV2, SV3 und SV4 und Druckabbausteuerung über Zeitsteuerung der Auslassventile AV1, AV2, AV3, AV4 kann eingesetzt werden. Das System ist somit modular und kann in Entwicklungsstufen ausgebaut werden.

Die Druckversorgereinheit DE weist einen Elektromotor M und über eine Spindel 7 angetrieben Plunger 8 auf, der sich nach links und rechts bewegt und einen Druckraum 9 aufweist. Alternativ zur Spindel kann der Plunger auch über eine Mutter/Spindel angetrieben werden, in der die Spindel mit dem Plunger 8 verbunden ist. Über ein Rückschlagventil 10 ist der Plungerdruckraum mit dem Vorratsbehälter 6 verbunden. Zudem ist der Motor ausgestattet mit einem Drehwinkelgeber 12a, einem Sensor zur Messung des Motorphasenstroms 12b und einem Temperatursensor 12c. Der Temperatursensor 12c misst die Motortemperatur und erhöht somit die Genauigkeit der Drehmomentschätzung, da die Drehmomentkonstante kt= Drehmoment/Phasenstrom sich proportional zur Temperatur verändert.

Das Pedalinterface weist redundante Wegsensoren 11 auf. Die Wegsensoren nehmen den Pedalwunsch des Fahrers auf und sind aus Sicherheitsgründen redundant ausgeführt. Ein Druckgeber 13 erfasst den Druck im Bremskreis II bzw. bei geöffneten Trennventil TV2 auch im Bremskreis BK I. Der Druckgeber wird primär zur Druckregelung verwendet, kann aber auch als alternative zum Kraft-Weg-Sensor (2 Pedalwegsensoren 11 über elastisches Glied 11a verbunden) zur Fahrerwunscherkennung ausgewertet werden. Die Funktion des Wegsimulators wird in Figur 4a beschrieben.

Der Druckaufbau und Druckabbau erfolgt über Wegsteuerung des Plungers 8 nach dem bekannten MUX-Verfahren, wobei zur Drückänderung eine oder mehrere Schaltventile SV geöffnet werden und die Druckänderung gleichzeitig oder simultan bzw. teilsimultan über die Druckvolumensteuerung erfolgt. In der Ausführungsform mit nur einem Auslassventil AV3 in RB3, kann der Druckabbau (P_{ab}) bei entsprechendem Differenzdruck von Radbremse RB1 RB2, RB4 zum Druckniveau der Druckversorgereinheit DE, gemessen mit Druckgeber 13, auch simultan erfolgen durch Zeitsteuerung eines oder mehrerer Schaltventile SV1, SV2 und SV4. Der Druckabbau der RB3 kann optional über AV3 erfolgen. In diesem Beispiel kann auch RB1, RB 2 oder RB4 volumengesteuert über MUX erfolgen. Das entsprechende Volumen muss der Plunger bei der Wegsteuerung berücksichtigen sowohl bei der Zeit- als auch Volumensteuerung. Die Verstellung des Plungers erfolgt vorwiegend auf Basis der vom Regler vorgegebenen Druckänderung und einer Wegsteuerung auf Basis der Druckvolumenkennlinie.

Bei der Drucksteuerung im MUX-Betrieb sind beide Druckräume DR1 und DR2 mit Druck beaufschlagt. Der SK-Kolben bewegt sich dabei nicht und wird mit einer Rückstellfeder gegen einen Anschlag 3 gedrückt. Die Feder stellt sicher, dass auch bei Druckunterschieden (Druckschwingungen, schneller Druckabbau im Bremskreis BK I im Vergleich zu BK II durch fehlende Drosselwirkung des Trennventils) der Druckkolben sicher an den Anschlag gedrückt wird und wird dementsprechend dimensioniert.

In der Leitung SLL zum Vorratsbehälter 6 ist eine Drossel mit Rückschlagventil 5 eingebaut. Die Drossel hat eine kleine Durchflussmenge von maximal 1% der Fördermenge der Druckerzeugereinheit als Verlustvolumen, da im Normalfall das SLL offen ist. Die Drossel ist notwendig für den Volumenausgleich bei Temperaturwechsel. Das SLL ist in der Rückfallebene geschlossen das Rückschlagventil dient zur Entlüftung des Bremskreises. Zusätzlich ist im Hilfskolben ein VD-Ventil vorgesehen, dass den Druckraum DR3 mit dem Vorratsbehälter verbindet. Das Ventil VD wird primär für Diagnosezwecke, insbesondere Dichtigkeitsprüfungen, eingesetzt und ist in Figur 4 näher beschrieben.

In der Rückfallebene (Systemausfall), z. B. Motorausfall wird das Volumen des Hilfskolbenkreises über das Einspeiseventil ESV in den Druckraum DR2 geführt. Dies führt zu Druckaufbau in beiden Bremskreisen (BK II direkt, BK I indirekt über Schwimmkolben). Zudem wirkt der Stößel 2 mechanisch auf den Druckkolben nach einem bestimmten Leerweg, der nur bei Ausfall BK II wirkt. Zudem wird die Druckversorgereinheit vom Hauptbremszylinder getrennt. Dies erfolgt über Schließen des Trennventils und überfahren des SK-Kolbens bei Pedalbetätigung der Dichtung und somit Abtrennung der Druckversorgereinheit vom Bremskreis I.

Der Schwimmkolben SK ist in der Normalfunktion Bremse und ABS nicht in Bewegung. Deshalb ist auch eine Diagnose der Dichtung mit Bewegung des Kolbens wichtig. Hierbei kann bei jedem Parkstop (sog. PSC) bei Fahrzeugstillstand der Druck im Bremskreis BK II durch Schließen der Ventile SV3 und SV4 gespeichert werden. Aus dem Bremskreis BK I wird über die Druckversorgereinheit DE der Druck auf 0 - 1 bar reduziert. Anschließend wird die Druckversorgereinheit DE blockiert, d. h. es findet keine Kolbenbewegung statt, TV2 schließt. Anschließend öffnen die Ventile SV3 und SV4, wodurch der Druck auf die Rückseite des SK-Kolbens wirkt, der sich entsprechend bewegt, um den Druck im Bremskreis BK I aufzubauen, der dann im Gleichgewicht zum Druck im Bremskreis BK II ist.

Vorteilhaft ist die Druckeinleitung nur über SV1, damit wird der Raddruck höher. Dieses Druckgleichgewicht wird über eine Zeit gehalten, in der dann die Dichtheit über den Druckgeber gemessen wird. Vorteil dieses Park-Stop-Check-Verfahrens (PSC) ist keine zusätzliche Beanspruchung der Druckerzeugereinheit zum Druckaufbau und eine autonome Dichtigkeitsprüfung, allerdings nur im niedrigen Druckbereich, was bekanntlich für Dichtungen relevanter ist als der höhere Druck. Dies kann mit entsprechender Beanspruchung der DE eingesetzt werden, was sich beim Fahrzeugservice empfiehlt.

Es wurde erwähnt, dass das Ausgangsdruckniveau des MUX zur Druckvolumensteuerung im Bereich des Druckniveaus des anschließend zu regelnden Rades ist. Dies bedeutet, dass bei asymmetrischer Fahrbahn das Druckniveau bis zu 130 bar schwankt. Dementsprechend müssen die Ventile sinnvoll geschaltet sein.

Alternativ kann zur Dichtigkeitsprüfung des Schwimmkolbens mit der Druckerzeugereinheit DE wie folgt durchgeführt werden:
a. über die Druckerzeugereinheit DE wird ein Druck in der Druckkammer DR2 und DR1 aufgebaut und Ventile werden derart geschalten, dass der Druck in DR2 grösser ist als in DR 1 und sich der Schwimmkolben bewegt und die Verbindungsleitung SLL zur Druckversorgereinheit schließt (z.B. bei geöffneten Ventilen SV1 und SV2 im Bremskreis I und geschlossenen Ventilen SV3 und SV3 im Bremskreis II)
b. Über die Druckerzeugereinheit wird ein Test-Wegprofil bzw. ein zeitlicher Druckvolumenverlauf abgefahren.
c. Über Auswertung des Druckgebers wird der sich veränderliche Druckanstieg im Vergleich zum Sollwertwertverlauf bei geöffneten Ventilen SV1-SV4 ausgewertet

Anstelle des ESV-Ventils, welches die Druckräume DR2 und DR3 des Hauptbremszylinders HZE miteinander verbindet, kann auch die oben rechts dargestellte Ventilschaltung bestehend aus den beiden Ventilen ESV1 und ESV2 verwendet werden. ESV1 ist über die Eingangsseite des Ventilsitzes und ESV2 über den Ankerraum an die hydraulische Verbindungsleitung VL4 angeschlossen. Diese Ventilschaltung hat den Vorteil, dass sie nur einen geringen Durchflusswiderstand zwischen den beiden Druckräumen DR2 und DR3 bildet und auch bei großen Druckdifferenzen zwischen den Druckräumen im Fehlerfall die Verbindung zwischen den Druckräumen durch Öffnen zumindest eines der Ventile ESV1 und ESV2 erfolgt.

Die **Figur 1b** zeigt eine Variante der Figur 1a mit einem Direktanschluss der Druckversorgerquelle an den Bremskreis und Trennung über ein weiteres Trennventil TV1, das auch als Diagnoseventil wirkt. Dies hat den Vorteil, dass der Schwimmkolben sich im Betrieb nicht bewegt bzw. bei Bewegung sichergestellt wird, ohne dass die Druckversorgerquelle DE auch bei Überfahren des Schnüffellochs durch den Schwimmkolben vom Bremskreis nicht abgetrennt wird und somit immer sichergestellt ist, dass ein Druckaufbau und Druckabbau im Bremskreis I erfolgen kann. Zudem kann die Bewegung des Kolbens sinnvoll diagnostiziert werden über Differenzdruckermittlung in Bremskreis I und Bremskreis II. Zur Differenzdruckmessung wird der Druckgeber 13 und die Druckberechnung in Bremskreis II über Auswertung der Phasenströme des Motors der Druckversorgereinheit verwendet. Alternativ oder ergänzend zur Druckschätzung kann die Position des Schwimmkolbens SK über einen Wegsensor 14 ermittelt werden, der die Position des SK erfasst.

Nachteil ist die Einführung eines weiteren Trennventils. Dies erhöht den Strömungswiderstand jedoch nicht, wenn die Druckeinspeisung primär weiterhin in den Druckraum DR1 erfolgt bzw. der Druckabbau über das Schnüffelloch SL erfolgt.

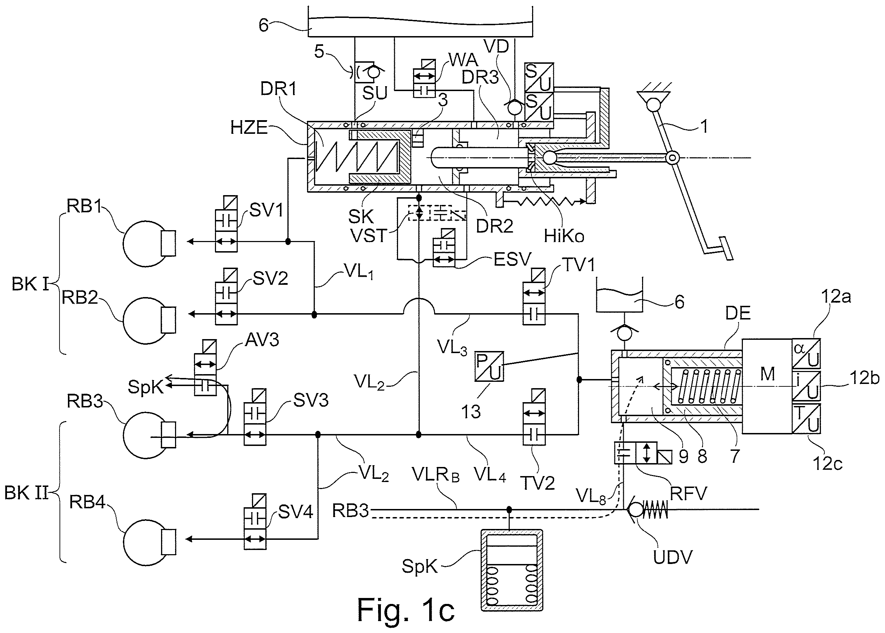

Die **Figur 1c** zeigt eine Erweiterung der in Figur 1a dargestellten Bremsanlage. Im Gegensatz zu Figur 1c ist die Druckerzeugerquelle direkt mit den Bremskreisen verbunden über ein Trennventil TV1 (keine Einspeisung über Schnüffelloch). In diesem Fall ist eine Bewegung des Schwimmkolbens ohne Funktionseinschränkung möglich. Anstatt einem großen Trennventil TV1 können auch je ein Trennventil je Radbremse RB1 und RB2 eingesetzt werden. Dies ist in der Zeichnung Figur 1c nicht ausgeführt. Dies ist im Sinne der Reduzierung der Strömungswiderstände gegebenenfalls sinnvoll und erleichtert den Multiplexbetrieb, insbesondere im Bremskreis I.

Eine weitere Systemerweiterung in Figur 1c ist die Einführung einer Niederdruckspeicherkammer SpK und einem Rückförderventils (RFV), ähnlich ABS, in Kombination mit einem Überdruckventil (UDV). Wird die Speicherkammer wie in dieser Ausführung an ein oder mehrere Auslassventile der Radbremsen angeschlossen, so kann diese zur Entlastung des MUX beitragen, indem in kritischen Situationen (z.B. ABS high-µ ein Rad mit hohen Schlupf) der Druck nicht über die SV und der Druckerzeugereinheit abgebaut wird sondern über die AV (hier AV3). Im Gegensatz zur Figur 1a und Figur 1b gelangt das Volumen nicht in den Rücklauf, sondern in die Speicherkammer SpK. Dies hat neben dem geschlossenen BK den Vorteil, dass bei Nachfördern NF des Kolbens der DE der Vordruck größer ist als der atmosphärische Druck ohne SpK, die Nachförderzeit verkürzt werden kann und damit die Unterbrechung des Druckaufbaus kürzer ist. Bei früheren Auslegungen von Nachförderventilen war immer das Problem dass man für die Funktion bei niedrigen Temperaturen extrem große Ventilquerschnitte vorsehen musste.

Dies ist durch den vorhandenen Vordruck in der Speicherkammer deutlich einfacher. Damit ist die Dimensionierung des RFV deutlich einfacher, da keine derart großen Querschnitte vorgesehen werden müssen. Das NF geschieht durch Öffnen des RFV, Schließen von TV1 und TV2 bzw. alternativ aller SV und zurückfahren des Kolbens der Druckerzeugereinheit.

Einer weitere Anwendung der SpK besteht darin, die DE mit kleinerem Hubvolumen zu gestalten, indem das Volumen für Fading und schnellen Vorfüllen beim Anbremsen aus der Spk genutzt wird. Wird der Fadingbereich erkannt und die DE kann kein weiteres Volumen mehr bereitstellen, so erfolgt ein Nachfördern aus der Speicherkammer in kurzer Zeit. Grundgedanke ist auch, dass die Speicherkammer idealerweise bei Fahrzeugstart durch die Druckerzeugereinheit gefüllt wird und damit immer Volumen bereithält. Ist die Speicherkammer bei Eintritt ABS noch voll und ein Druckabbau über ein AV notwendig so ist hier das UDV vorgesehen über welches das Volumen aus den Radbremszylindern über das AV und das UDV in das Reservoir abfließen kann.

Nach dem Nachfördern hat die DE mehr Volumen, so dass beim P_{ab} ein Druckausgleich erfolgt. Dies ist möglich, indem der DE-Kolben wie beim konventionellen THZ über ein Schnüffelloch SL (nicht in Zeichnung ausgeführt) in die Endstellung fährt und damit das überschüssige Volumen in den Vorratsbehälter 6 leitet.

Grundsätzlich ist diese Kombination SpK, RFV und UDV mit dazugehörigen AV auch kombinierbar mit den Lösungen in Fig. 1a und 1b. sowie allen weiteren Plungerlösungen die im MUX-Betrieb laufen. Es ist hier vorgesehen den MUX speziell in den Situationen high-µ über die Schaltung zu entlasten auf low-µ aber in reinen MUX Betrieb zu fahren.

**Figur 2a** stellt eine Variante des erfindungsgemäßen Systems mit einem Stufenkolben als Druckerzeugereinheit dar. Die Stufenkolbendruckerzeugereinheit besteht aus einem Plunger, der über einen Kugelgewindetrieb angetrieben wird und besteht aus zwei Kammern SK1 und SK2. Die Verbindung zu den Bremskreisen ist identisch mit Figuren 1a bis 1b. Dargestellt ist die Ausführung mit einem Auslassventil AV3 im Bremskreis BK II, dass um ein weiteres Auslassventil AV4 optional erweitert werden kann.

Ebenfalls ist die direkte Druckversorgung mit DR2 (Variante Var1) bzw. ergänzend die direkte Verbindung mit den Bremskreisen über ein Trennventil TV1 (Variante Var2) möglich. Denkbar ist auch eine direkte Verbindung des BK I über die Druckversorgereinheit DE mit einem Trennventil, wie in Figur 1c ausgeführt.

Der Druckaufbau erfolgt durch Vorbewegung des Kolbens, der aus 2 Kammern SK1 und SK2 besteht. Eine Rückbewegung des Plungers des Stufenkolbens erfolgt dann, wenn über Auslassventile Volumen abgelassen wird. Damit wird verloren gegangenes Volumen nachgefördert. Bei niedrigen Drücken, schnellen Anbremsen wird vorzugsweise das Ventil ShV geöffnet und PD1 geschlossen und das Volumen beider Druckkammern wird in das Bremssystem gefördert. Dies erzielt den gewünschten Vorfülleffekt. Bei Betrieb bei höheren Drücken wird ShV geschlossen und Druck in den Vorratsbehälter über PD1 abgelassen. Dann wirkt für den weiteren Druckauf- und Druckabbau die kleinere Hydraulikfläche und der Motor kann verkleinert werden, da der Drehmomentbedarf sinkt.

Der Druck kann ebenfalls druckgesteuert über Druckmessung über den zentralen Drucksensor über die Ventile ShV und PD1 abgebaut werden. Dies bietet sich insbesondere bei hohen Drücken bzw. nach Abschluss der ABS-Regelung an und ist in den Ausführungsformen der Figuren 3a-3c näher beschrieben.

**Figur 2b** stellt eine Alternative des erfindungsgemäßen Systems mit einem Stufenkolben als Druckerzeugereinheit dar. In Gegensatz zu Figur 2a wird SK1 über ein Trennventil ShV mit Bremskreis I und SK2 direkt oder über ein Trennventil TV2 direkt mit Bremskreis II und Druckkammer DR2 verbunden. Die Nutzung von beiden Kammern wird insbesondere beim normalen BKV-Betrieb, ABS genutzt (bis 120 bar). Der Druck kann mit geringen Strömungswiderstand direkt in die Bremskreise gefördert werden. Dies ermöglicht ein sehr schnelles Anbremsen. In Bremskreis BK II ist zusätzlich zur Ablassregelung ein Auslassventil AV3 vorgesehen. Optional kann das PD1-Ventil bei geöffneten ShV-Ventile auch als Ablassventil durch Druckabbausteuerung genutzt werden, mit den gleichzeitig Bremskreis II im Multiplexbetrieb betrieben werden kann und Druck im Bremskreis BK I über Öffnung des Schaltventils SV1 und/oder SV2, ShV und PD1 abgebaut wird. Bestimmte Fehlerfälle (z.B. Ausfall BK I) können Auswirkungen auf BK II haben. In diesem Fall wird der Schwimmkolben bei Betätigung des BK II verschoben und führt auch einem Ausfall von BK II. Um dies zu verhindern ist ein Sperrelement SE vorzusehen, dass die entweder die Zuleitung der DE in den Druckraum DR2 sperrt, den Schwimmkolben blockiert oder die Verbindung zwischen DR1 und BK1 sperrt.

**Figur 3a** stellt die Ausführungsform des erfindungsgemäßen Systems mit einem Doppelhubkolben als Druckerzeugereinheit in einer einkreisigen Ausführung dar. Die Druckerzeugereinheit besteht aus einem Elektromotor M, einem Kugelgewindetrieb 7, der einen Kolben 8 antreibt, der auf zwei Druckkammern DHK1 und DHK2 wirkt. Über ein vorzugsweise ein Druckablassventil PD3 beziehungsweise alternativ oder optional ergänzend PD1-Ventil ist eine oder beider Druckkammern des Doppelhubkolbens DHK1 (DHK2) mit dem Vorratsbehälter 6 verbunden. Beide Druckkammern sind zudem mit Rückschlagventilen RV mit dem Vorratsbehälter 6 verbunden. Die vordere Druckkammer DHK1 ist über das Schnüffelloch mit BK I und Radzylinder RB1 und RB2 verbunden, sowie über ein Trennventil TV2 mit RB3 und RB4. Die hintere Druckkammer DHK2 ist über ein weiteres Trennventil TV2b mit DR 2 und RB3 und RB4 verbunden. Den Radbremsen vorgeschaltet sind jeweils Schaltventile SV1 bis SV4. Im Bremskreis II ist der Druckgeber angeordnet. Bremskreis BK II weist zwischen Radbremse und Schaltventil ein Auslassventil AV3 auf, das optional über ein weiteres Auslassventil AV1 im Bremskreis I ergänzt wird. Das Bremssystem wird primär im Multiplexbetrieb betrieben, wobei zusätzlich Auslassventile AV3 (AV1) in den Radbremsen zum Druckabbau über Zeitsteuerung vorgesehen sind. Der Druckaufbau/ Druckabbau erfolgt über Vorhub/Rückhub des Doppelhubkolbens und Öffnung der Schaltventile SV1 bis SV4 sowie TV2/TV2b und Drucksteuerung über Kolbenweg und Kolbengeschwindigkeit. Ebenfalls kann der der Druck über die eine oder beide Kammern des Doppelhubkolbens (DHK1, DH2) durch Zeitsteuerung der Schaltventile SV3, SV4 und PD1 bzw. SV1, SV2 und PD3 abgebaut werden. Für den Druckabbau insbesondere im Bremskreis II kann der Druckabbau auch druckgesteuert durch Druckmessung über den zentralen Drucksensor 13 erfolgen.

Wird das Volumen des Vorhubes im Druckaufbau aufgebraucht, erfolgt ein weiterer Druckaufbau im Rückhub des DHK. Dies bedingt, dass PD1 nicht eingesetzt wird bzw. geschlossen ist. Dabei wird das Volumen über TV2b in DR II und BK II geführt und über den Schwimmkolben auf den BK I übertragen. Der Druckaufbau erfolgt sehr genau aus dem Vorhub- und Rückhubbetrieb des Doppelhubkolbens über Druckvolumensteuerung. Für den seltenen Fall des Betriebs bei hohen Drücken wird primär der Druck im Rückhub aufgebaut.

Für den Druckabbau aus dem hohen Druckbereich gibt es verschiedene Möglichkeiten wie oben beschrieben. So kann durch entsprechende Ventilbetätigung das Volumen über ein Auslassventil PD3 (PD1) am Doppelhubkolben aus dem hohen Druckbereich abgebaut werden, während gleichzeitig der Doppelhubkolben positionsgeregelt verfahren wird. Für den Druckabbau ist das PD3-Ventil gegenüber dem Ventil PD1 zu bevorzugen, aus Kostengesichtspunkten wird sinnvollerweise nur das PD3-Ventil eingesetzt. Der Druckabbau bei hohen Drücken (>100 bar) erfolgt bei einem System mit ausschließlich PD3-Ventil vorzugsweise in folgenden Verfahrensschritten:
a. Druckabbau von hohen Drücken in erster Phase über Drucksteuerung und Druckmessung über PD3-Ventil und der entsprechenden Ventilöffnung der Ventile (SV1-SV4,TV1, TV2, TV2b) zur Radbremse (z.B. 180bar bis ca. 80-100bar)
b. Verfahren des Doppelhubkolbens im Vorhubbetrieb bei gleichzeitiger Öffnung des Ventils/ Ventile die DHK1 und DHK2 verbinden (TV2 und TV2b, ShV)
c. Weiterer Druckabbau des Doppelhubkolbens im Rückhubbetrieb über Druckvolumensteuerung mit Druckmessung über Druckgeber
d. Positionierung in Ausgangsstellung des Doppelhubkolbens (z.B. Anfangsposition für Atmosphärendruck), Nachförderung Volumen über Rückschlagventile

Alternativ zum PD3-Ventil kann der Druck über das PD1-Ventil und entsprechend angepasstem Verfahren abgebaut werden. Beim Druckabbau über PD1 werden im Bremskreis II die Ventile geöffnet, die zur Verbindung mit den Radbremsen erforderlich sind (SV1-SV4, TV2b), und der Druck wird über Drucksteuerung und Druckmessung abgebaut. Der Druckabbau in Bremskreis BK I kann durch Öffnen von Ventil TV2 erfolgen bzw. über den Rückhub des Doppelhubkolbens 8 abgebaut werden. Da im Druckraum DHK2 nahezu konstanter Druck herrscht, der nahe dem Atmosphärendruck ist, kann der Druck in BK I über Volumensteuerung bzw. Wegsteuerung des Doppelhubkolbens abgebaut werden.

Wird stattdessen der Druck über ein Auslassventil abgebaut, hat dies den Nachteil, dass der Bremskreis geöffnet werden muss und je ein Auslassventil je Bremskreis wegen Druckausgleich eingesetzt werden muss. Das PD1 befindet sich nicht im Bremskreis und ein möglicher Ausfall durch Undichtheit ist durch das Trennventil TV2b geschützt.

Die möglichen Ventilschaltungen mit DHK ermöglichen für den ABS- und MUX-Betrieb zusätzliche Möglichkeiten:
i. Druckaufbau in einem Bremskreis und Druckabbau im anderen Bremskreis
ii. Unabhängiger über Druckgeber/ Druckberechnung geregelter Druckabbau in beiden Bremskreisen über die Druckversorgereinheit und Verbindung des Doppelhubkolbens über PD3 (PD1) mit dem Vorratsbehälter

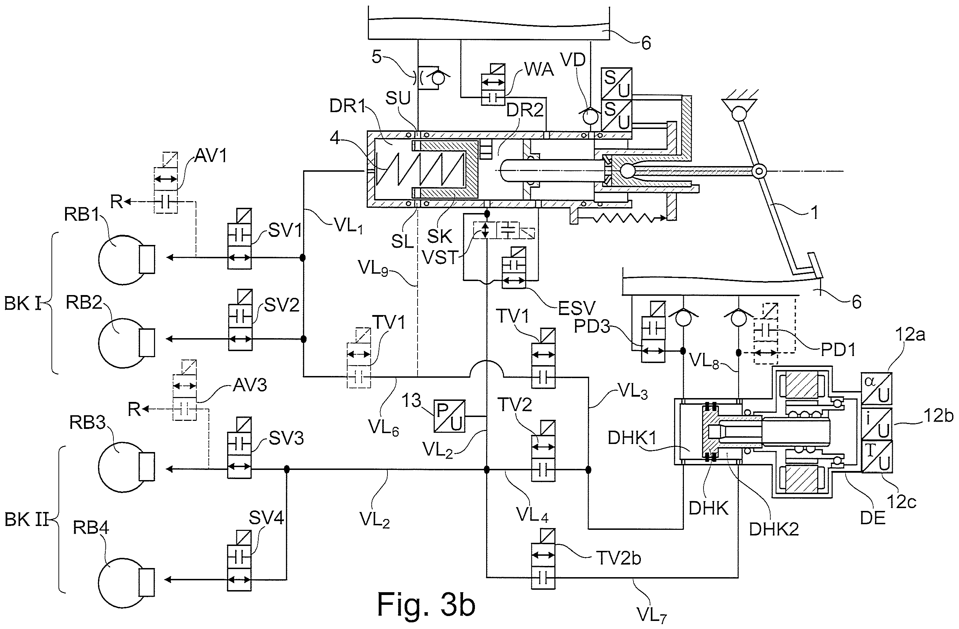

Das oben beschriebene Verfahren zur Druckabbausteuerung bei hohen Drücken sowie die zusätzlichen Möglichkeiten (i), (ii) gelten auch für die nachfolgend beschriebenen Ausführungsformen der Figuren 3b und 3c.

Mit diesen Freiheitgraden bietet die neuartige Druckregelung wesentlich mehr Möglichkeiten als die reine MUX-Regelung.

Die in **Figur 3b** dargestellte Ausführungsform ist in der Funktion vergleichbar mit dem einzigen Unterschied, dass ein Trennventil TV1 zwischen BK I und Druckversorgereinheit geschalten ist und die Abtrennung nicht zwingend über die Überdeckung des Schwimmkolbens des Schnüffellochs erfolgt. Dabei sind 2 Varianten alternativ denkbar. In einer ersten Variante wird das Trennventil TV1 direkt am Ausgang der Druckversorgereinheit positioniert und die Druckversorgereinheit ist direkt mit Schaltventilen SV1 und SV2 verbunden. In einer zweiten Variante ist eine Zuleitung VL9 vorgesehen, so dass analog zur Figur 1b eine Druckänderung über das Schnüffelloch SL möglich ist. In diesem Fall wird das Trennventil TV1 verschoben und ist nach der Zuleitung VL9 zwischen Druckversorgereinheit und Schaltventilen SV1 und SV2 positioniert. Dieser Mehraufwand ermöglicht eine Bewegung des Schwimmkolbens z.B. durch unterschiedliche Drücke in BK I und BK II und gibt dem System somit mehr Freiheitsgrade, z.B. der Druck im DRI muss nicht zwingend höher oder gleich sein als im DR II, bzw. die Bewegung des Schwimmkolbens kann durch eine Bewegung des Wegsimulatorstößels zugelassen werden. Diese Ausführungsform ermöglicht mehr Freiheitsgrade in der Ausführung der Wegsimulatoren. Die Druckregelung erfolgt analog zu Figur 3a.

Optional kann auf das TV1 komplett verzichtet werden, wenn das PD3 (PD1) Ventil durch ein stromlos geschlossenes SG-Ventil ersetzt wird. Das Trennventil PD3 (PD1) kann die Doppelhubkolbeneinheit in der Bewegung sperren, somit kann im Ausfall kein weiteres Volumen in der Druckversorgereinheit durch Bewegung des Hauptbremszylinders aufgenommen werden. Auch in dieser Systemgestaltung ist es analog zu Figur 2a sinnvoll, nur ein PD3-Ventil einzusetzen.

Die Ventilschaltung von Figur 3b ermöglicht auch eine Bewegung des SK-Kolbens beim normalem Druckaufbau, wenn beim Vorhub des Doppelhubkolbens das Volumen über TV2 in die Leitung VL4 in Bremskreis II gelangt und gleichzeitig das TV1 geschlossen ist. Dann bewegt sich der SK-Kolben bis gegebenenfalls zum linken Anschlag. Bei weiterem Druckaufbau über Rückhub wird Volumen über die Ventile TV2b, TV2 und TV1 in die Leitung VL1 des Bremskreises gefördert. Gleichzeitig steht über das Ventil VL2 im Druckraum DR1 derselbe Druck wie im Druckraum DR2 an. Aufgrund der Dichtungsreibung bliebt der Schwimmkolben trotz Rückstellfeder in dieser Stellung. Beim Druckabbau aus dem hohen Druckbereich verharrt der Schwimmkolben SK in dieser Position, während Volumen über das Ventil PD1 oder das Ventil PD3 in den Vorratsbehälter 6 geleitet wird bis der Druck ca. 100 bar erreicht hat. Bei weiterem Druckabbau ist der Doppelhubkolben 8 vorzugsweise in Endposition des Vorhubs. Dann kann der Druckraum DR2 zuerst durch Öffnen von TV2 bei geschlossenen TV1 im Druck reduziert werden. Der Druck in den Radbremsen des BK II wird abgebaut, gleichzeitig bewegt sich der Schwimmkolben SK wieder zurück in die Ausgangsstellung. Damit ist der Schwimmkolben SK mit den Dichtungen mit dem Bremsdruck belastet. Eine Undichtigkeit wird sofort über die Volumenbilanz unter Auswertung der p-V-Kennlinie erkannt, wenn z.B. die Volumenförderung des DHK größer ist als der Sollwert aus Volumen und entsprechendem Druck aus der p-V-Kennlinie. In einfachen Worten, es wird erkannt, wenn bei konstantem Druck ohne ABS-Betrieb Volumen gefördert wird.

Für manche Betriebsfälle, z.B. ABS kann der SK-Kolben auch aktiv zurückbewegt werden in die Anfangsstellung. Dies erfolgt durch ein entsprechendes Einstellen einer Druckdifferenz in den Druckräumen DR1 und DR2 durch gezielte Ventilschaltung TV1 und TV2 und Kolbensteuerung. Im ABS-Betrieb ist der Druck in den Druckräumen DR1 und DR2 weitestgehend gleich und somit bewegt sich der Schwimmkolben SK nicht. Bei Betrieb mit ungleichen Drücken ist darauf zu achten, dass der Druck im Druckraum DR2 kleiner ist als im Druckraum DR1. Damit ist der Schwimmkolben SK auch bei Systemausfall bei ABS in einer definierten Position. Dies ist insbesondere für die Steuerung der Rückfallebene interessant.

Für die Druckabbausteuerung wurden die Ventilfunktionen von PD1 und PD3 beschrieben. Diese können ersetzt werden, wenn z.B. beim Druckabbau mindestens ein Auslassventil AV genutzt wird. In diesem Fall ist jede Kammer des Doppelhubkolbens nur über Rückschlagventil(e) mit dem Vorratsbehälter verbunden. Das Volumen der zweiten Druckkammer des Doppelhubkolben DHK2 wirkt dann beim Druckabbau über TV2b dem Volumen der Radbremsen RB1-RB4 entgegen, hat aber dieselbe Wirkung wie ein Druckabbau über PD1. Die Druckabbausteuerung kann auch dann über den Druckgeber erfolgen. Das Sicherheitsrisiko durch Öffnung des Bremskreises über ein Auslassventil und Undichtigkeit beim Schließen kann z.B. durch Diagnose gegen Bremsende erfolgen, indem ein niedriger Druck z.B. 10 bar für die Vorderachse mit AV über eine kurze Zeit (z.B. 100 ms) konstant bleibt. Über die Druckänderung bei unbeweglichem Doppelhubkolben wird die Undichtigkeit erkannt. Damit kann ein schlafender Fehler ausgeschlossen werden.

Die **Figur 3c** beschreibt ein System mit Doppelhubkolben in einer Anwendung für autonomes Fahren vorteilhaften zweikreisigen Ausführung. Der Aufbau von HZE, DE und Ventilschaltung für Drucksteuerung ABS mit MUX und Auslassventilen ist identisch zur Figur 3a und Figur 3b.

Im Gegensatz zur Figur 3a und 3b wirkt die Druckversorgung im Vorhub auf Bremskreis BK II und die Rückseite des Schwimmkolben SK. Dieser überträgt das Volumen und den Druck in den Bremskreis BK1. Ist der Doppelhubkolben nahe der Endstellung angelangt, wird er umgesteuert und im Rückhub betrieben und wirkt auf BK1. Dann wirkt über den Rückhub Druck auf die Vorderseite des SK. Dieser überträgt den Druck auf den Bremskreis BK2. Der SK-Kolben ist immer wie bei heutigen HZE mit seinen Dichtungen in aktiver Bewegung.

Der Doppelhubkolben hat zusätzlich ein Bypassventil ShV, welches im Wesentlichen unter drei Bedingungen geschaltet wird:
a) Bei hohem Druck wird zur Reduzierung der Kolbenkraft das Volumen des Vorhubes auch zum Druckausgleich auf die Rückseite des Doppelhubkolbens geleitet
b) Bei ABS-Regelung, auch MUX-Regelung, wird der Doppelhubkolben auf einkreisig umgeschaltet
c) Druckabbau P_{ab} aus hohem Druckniveau

Zur Reduzierung des Magnetventilaufwandes kann an Stelle des ShV ein Rückschlagventil RV eingesetzt werden. Hiermit kann der Volumenstrom des Vorhubes bei geschlossenem TV1 über RV zur Sekundärseite des SK umgeleitet werden. Hiermit kann mit zusätzlichem Sensor, der die Position des SK misst, dessen Position geregelt wird. Dies ist von Vorteil, da die SK-Position in Abhängigkeit der Position des HiKo erfolgt. Dies ist vorteilhaft für die Rückfallebene, da bei Ausfall der DE von HiKo das Volumen zum SK gelangt. Bei ungünstiger Position des SK kann der HiKo mit entsprechendem Volumen den SK frühzeitig zum Anschlag links bewegen. Dies hat zur Folge, dass nur noch im BK II Druck aufgebaut wird und unsymmetrische Drücke im BK I und BK II auftreten.

Der Druckabbau erfolgt wie in Figuren 3a, 3b. Für den Druckabbau über den Doppelhubkolben wird daher mindestens ein PD-Ventil (PD1, PD3), vorzugsweise nur ein PD3-Ventil eingesetzt. Das Druckabbauverfahren erfolgt analog zur Beschreibung in Figur 3a.

Für spezielle Funktionen beim Druckaufbau p_{auf} in BK I und Druckabbau p_{ab} in BK II und umgekehrt, ist es von Vorteil, in den BK II in der Verbindung zum THZ ein zusätzliches als Sperrelement SE (z.B. Magnetventil (MV)) einzusetzen, welches die Bewegung des Schwimmkolbens SK verhindert. Das Sperrventil SE kann auch Bestandteil des HZE sein.

Dieses System beinhaltet noch das zusätzliche Potential, den Druck in BK II über den DHK Kolben 3 und getrennt von BK I über die Ventile TV2 (TV2b) und PD3 (PD1) abzubauen.

Diese Lösung hat Vorteile bei der Anwendung für unterschiedliche Druckniveauansteuerung an beiden Achsen bei Rekuperation. Hierzu muss dann das Sperrelement SE am SK oder im BK I eingesetzt werden.

**Figur 4a und 4b** beschreibt den Aufbau und die Wirkungsweise/Steuerung eines Stößelwegsimulators mit druckproportionaler Rückwirkung auf das Bremspedal.

Im Bremskraftverstärkerbetrieb wirkt der Bremsdruck auf den Pedalstößel und erzeugt eine druckproportionale Kraft auf das Bremspedal. In diesem Fall ist der Hilfskolben in der Wegsimulatoreinheit drucklos und das Volumen wird über ein WA-Ventil in den Vorratsbehälter gefördert. Das ESV-Ventil ist geschlossen. Im ABS-Betrieb kann die Pedalcharakteristik durch Öffnen des ESV-Ventils verändert werden und durch Schließen des WA-Ventils das Pedal steif geschaltet werden. Damit ist eine andere Pedalweg-Kraft-Charakteristik einstellbar. Zudem ist eine pulsierende Rückwirkung auf das Pedal ähnlich dem heutigen ABS durch Taktung des WA-Ventils möglich. Das spezielle VD-Ventil wird in der Verbindungsleitung zum Vorratsbehälter eingesetzt und kann zur Diagnose der Dichtheit von WA-Ventil und HiKo verwendet werden, Hierfür kann von der Druckversorgung DE Druckmittel über das offene ESV in den HIKO eingeleitet werden. Das VD-Ventil ist als Strömungsventil ausgelegt und schließt bei größerer Durchströmung in den Vorratsbehälter. Im Normalbetrieb funktioniert VD als Saugventil zum Füllen des HiKo-Raumes. Ein Nachteil des Stößelsimulators entsteht, wenn die einzelnen Achsen unterschiedliche Bremsdruckniveaus benötigen, die angetriebene Achse infolge der Bremswirkung des Generators weniger Bremsdruck benötigt. Hierbei spricht man von Ausblenden des entsprechenden Bremsdruckes für die Radbremsen.

In **Figur 4b** ist eine Steuerungsmöglichkeit dargestellt, mit der nur eine geringere Pedalrückwirkung bei unterschiedlichen Bremsdrücken erzielt wird. Bei der Bremsdruckeinleitung wird p1-Achse1 (vom Generator angetrieben, z.B. RB1 und RB2) versetzt zum p2-Achse2 (nicht angetrieben, z.B. RB3 und RB4) geregelt. Hierbei wird bei Rekuperation mit sogenannten Blending bei einem bestimmten Differenzdruck der Druck stufenweise eingesteuert. Hierbei schließt kurzzeitig das WA-Ventil mit entsprechender Rückwirkung auf das Pedal, was durch das elastische Glied des KWS (E123a) eine zusätzliche Pedalbewegung zulässt. Anschließend öffnet wieder das WA-Ventil. In P2 kann sich der Solldruck verändern. Entscheidend ist, dass die Druckstufen klein und die Schließdauer des WA klein ist.

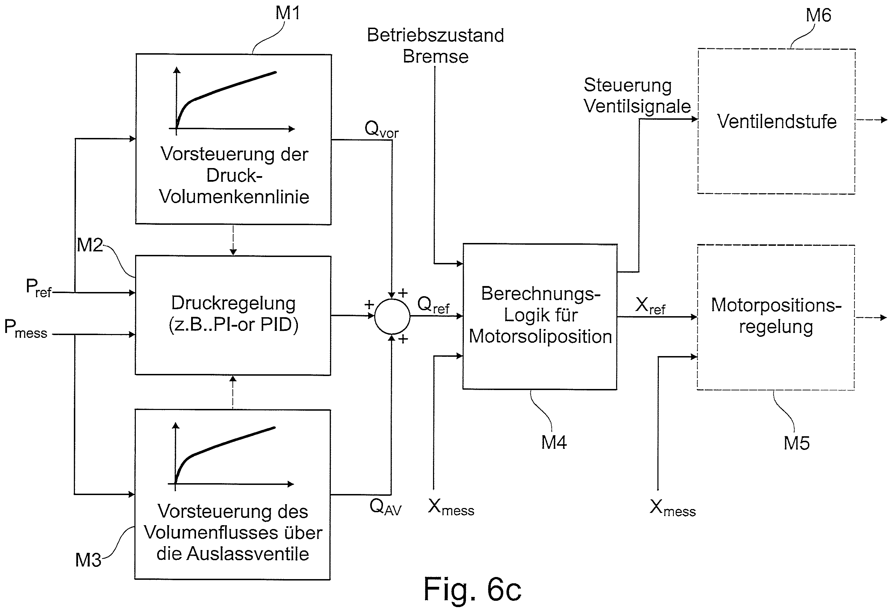

Alternativ kann auch das WA-Ventil offen sein, indem beim gestuften Druckaufbau in der p1-Achse der Druck in der p2-Achse (Radbremsen im Bremskreis II) schnell ausgeregelt wird. Damit wird die Pedalrückwirkung, die proportional zum Druck im Bremskreis II ist weniger stark durch unterschiedliche Drücke in den Radbremsen des Bremskreises beeinflusst. Zudem kann die Drucksteuermethode nach Figur 6c einsetzt werden, in dem die Phase des Druckaufbaus mittels der DE der p2-Achse entsprechend geregelt ist. Dies ist bei offenen WA gut möglich.

**Figur 5a** und **Figur 5b** zeigen einen Wegsimulator mit Hilfskolben basierend auf WO 2012/034661 . Hier wird ein Stößel eingesetzt, dessen Dimensionierung und Schaltung gewählt werden kann für unterschiedliche Pedalrückwirkung.

Mit Pedalrückwirkung bleiben die zusätzlichen Ventile VST und alternativ VST2 offen bzw. entfallen, wenn dies gefordert wird. Der beim ABS-Betrieb variable Druck in BK2 wirkt auch auf den Stößel und die Pedalkraft als Überlagerung zur Druckkraft des Wegsimulatorkolbens. Ist der WS-Kolben ausgesteuert, so wirkt das Pedal hart ohne zusätzliche Bewegung: Hier ist der Kraft-Weg-Sensor KWS ausgesteuert.

Der Kolben-Stößel kann zusätzlich mit Pedalrückstellfeder so ausgelegt werden, dass er den ersten flachen Teil der Wegsimulatorkennlinie liefert und der progressivere Kraftanstieg durch den Kolben-Wegsimulator erfolgt. Dadurch wird der Wegsimulator erheblich kleiner. In diesem Betriebszustand ist das VST offen.

Wird diese Rückwirkung von ABS oder Rekuperation nicht gewünscht, so kann ein Ventil VST eingesetzt werden, welcher den Steuerdruck der Druckerzeugereinheit nicht in DR2 zulässt. Bei VST2 als Alternative wird zusätzlich der DR2 drucklos durch Verbindung zum Rücklauf in den Vorratsbehälter.

Soll nun keine ABS-Rückwirkung auf das Pedal gewünscht sein, wird das VST geschlossen und das ESV geöffnet. Hiermit findet ein Druckausgleich zwischen DR 2 und HiKo statt, so dass der Stößel keine Reaktionskraft erfährt. Bei Aussteuerung des WS-Kolbens wird das Pedal hart.

Alternativ kann das VST2 als 3/2-Wege Ventil eingesetzt werden. Im geschalteten Zustand wird Druckraum 2 mit dem Rücklauf verbunden, so dass keine Pedalrückwirkung entsteht. In der Rückfallebene bei Ausfall Motor ist das ESV offen, so dass der HiKo wie bei einem THZ auf den SK wirkt.

In **Figur 5c** wird der SK-Kolben mit DR 2 über einen zweiten Stößel St2 nach außen verbunden. Der HiKo wirkt mit Stößel ohne Gegendruck, so dass hier keine Rückwirkung des Bremsdruckes in BK2 wirkt. In der Rückfallebene ist das ESV auf mit derselben Wirkung wie in Figur 4a. Bei Ausfall HiKo wirkt nach dem Leerweg LW der HiKo-Stößel auf den SK-Stößel St2

Die beschriebenen Wegsimulatorkonzepte erfüllen alle Forderung an Pedalcharakteristik und Fig. 4a ist die Variante mit geringsten Kosten und hoher Fehlersicherheit und Diagnosesicherheit, einen natürlichen gewünschten Pedalrückwirkung im Bremskraftverstärkerbetrieb (kraftproportionale Verstärkung) und moderate Pedalrückwirkung im ABS-Betrieb, jedoch einer aufwändigeren Regelung für Rückwirkungsfreiheit im Rekuperationsbetrieb. Varianten 5a-5c sind rückwirkungsfreie Lösungen und daher insbesondere für den Einsatz in Hybridfahrzeugen mit starker Rekuperation geeignet.

**Figur 6a** beschreibt die für die Druckregelung ohne Hysterese vereinfachten relevanten Druck-Volumen-Kennlinien im geschlossen Bremskreis bzw. Verschiebung nach Druckabbau mit geöffnetem Auslassventil AV. Ausgehend von einem Druck p1 wird über Sollvergabe des Differenzdruckes Δp die erforderliche Volumenverschiebung ΔV bzw. Wegänderung Δs des Kolbens aus der Kennlinie abgelesen. Diese unterscheiden sich und sind davon abhängig, ob in einem oder mehreren Bremskreisen der Druck verändert wird. Der Kolben wird dann entsprechend verschoben. Wird der Druck über ein oder mehrere Auslassventile abgebaut, kommt es zu einem Volumenverlust in der Druckerzeugereinheit. Für einen weiteren Druckabbau oder Druckaufbau im geschlossenen Bremskreis wird die Wegzuordnung der Druckvolumenkennlinie durch Erfassen des Druckes bestimmt. Dies wird in der Regelung für die Kontrolle des Volumenhaushaltes benötigt, da der Arbeitsraum der Druckerzeugereinheit nur ein begrenztes Volumen hat und somit gegen Ende der Hubbewegung des Kolbens, dieser bei einem Volumenänderungsbefehl an den Anschlag fahren würde. Kommt der Kolben der Druckerzeugereinheit nach einer Druckänderung in die Nähe des Anschlages und steht ein weiterer Druckanstieg an, wird der Kolben der Druckerzeugereinheit (Einfachhubkolben, Stufenkolben) bei geschlossenen Schaltventilen SV kurzzeitig zurückgefahren, um aus dem Vorratsbehälter Volumen anzusaugen. Bei der Ausführung der Druckerzeugereinheit mit Doppelhubkolben (Fig. 3a, 3b, 3c) wird dieser zurückgefahren oder auf den Rückhubbetrieb umgeschaltet.

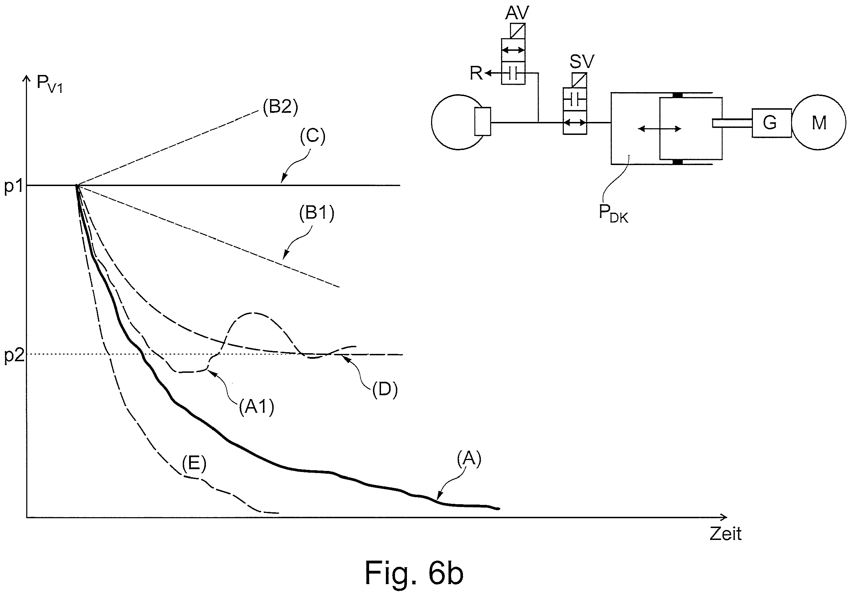

**Figur 6b** beschreibt die Druckregelung im offenen Bremskreis mit geöffnetem Auslassventil AV. Ausgangszustand ist ein Druck p1 im Verbraucher V1 (pV1) und pDk im Druckraum 2 des Kolben 1. Wird bei geschlossenem Einlassventil EV das Auslassventil AV geöffnet, kann der Druck entsprechend dem zeitlichen Verlauf (A) abgebaut werden. Dieses Verfahren wird von Standardregelsystemen genutzt. Ist eine Druckregelung erforderlich, wird über Zeitsteuerung der Ventilbetätigung der Druck entsprechend A1 abgebaut und zu einer bestimmten Zeit bei Erreichen des Solldruckes p2 das Auslassventil AV geschlossen. Es folgen Druckschwingungen, bis sich der Druck auf das Druckniveau p2 einstellt. Bei der neuartigen Druckregelung im offenen Bremskreis wird das Einlassventil EV und das Auslassventil AV geöffnet und Volumen nachgefördert über den Kolben 1. Damit kann der gewünschte optimale zeitliche Verlauf (D) realisiert werden und Druckschwingungen verhindert werden.

Ein weiterer Freiheitsgrad ist die Regelung mit einem konstanten Druckabbaugradienten (B1). Dies wird dadurch erreicht, indem über Druckregelung die Verstellgeschwindigkeit des Kolbens geregelt wird. Dabei wird sinnvollerweise der Regler über ein Drehzahlkennfeld vorgesteuert. Der nichtlineare Druckabbaugradient des Auslassventils wird dadurch linearisiert. Möglich sind ebenfalls ein Konstant halten des Druckes (C) sowie ein konstanter Druckanstieg. Druck konstant halten ist sinnvoll bei Diagnoseverfahren von Ventilen und Kompensation von Leckagen im System, insbesondere im Bremskreis. Damit kann ein Bremskreisausfall durch Ventilleckage kompensiert werden. Ebenso kann der Druck auch bei offenem Auslassventil entsprechend der Leistungsfähigkeit des Motors erhöht werden.

Soll der Druckabbau schnell erfolgen, ergibt sich zusätzlich die Möglichkeit, das Einlassventil EV und das Auslassventil AV gleichzeitig zu öffnen und Kolben 1 zurückzufahren. Dadurch kann das Volumen im hydraulischen Verbraucher gleichzeitig über das Einlassventil EV und das Auslassventil AV abgebaut werden (E), d.h. der Druckabbaugradient kann erhöht werden. Dies ist als Optimierungsmöglichkeit sinnvoll, um Ventile mit kleinen Querschnitten einzusetzen. Diese sind in der Produktion kostengünstiger.

**Figur 6c** zeigt ein Reglerblockschaltbild, welches für die oben beschriebenen Druckregelabläufe eingesetzt wird. Hierbei wird eine (nicht dargestellte) elektronische Steuer- bzw. Regeleinheit (ECU) verwendet, die bei allen Ausführungsformen der Erfindung vorgesehen ist. Aus dem Solldruck (Pref) wird über die Vorsteuerung einer Druck-Volumen-Kennlinie (M1) eine Volumenflussanteil (Qvor) berechnet. Zudem kann über die Vorsteuerung des Volumenflusses über die Auslassventile (M3) auf Basis des gemessenen Istdruckes im System (pmess) ein Vorsteueranteil QAV berechnet werden. Die Druckregelung (M2), welche vorzugsweise als PI- oder PID-Regler ausgeführt ist, berechnet die eigentliche Stellgröße. Es ist auch vorstellbar, dass die Reglerverstärkungen von (M2) über die Arbeitspunkte aus den Vorsteuerblöcken (M1) und (M3) verändert werden. Die Volumenflussanteile aus (M1), (M2) und (M3) ergeben summiert einen Sollwert für den Volumenfluss aus der Druckerzeugereinheit, welche dann als Eingangsgröße für die "Berechnungslogik für die Motorposition" (M4) verwendet wird. (M4) berechnet mit Hilfe der weiteren Eingangsgröße (Xmess) "gemessenen Kolbenposition" und des Betriebszustandes der Bremse (Druckaufbau, Druckabbau, Bremskraftverstärker, ABS,...) einen neuen Positionssollwert für den Kolben (Xref) und die geeigneten Ventilschaltsignale. Mit Hilfe dieser Logik und den unterlagerten Modulen (M5) und (M6) ist es möglich, eine sehr präzise Druckregelung für Druckaufbau und Druckabbau zu realisieren. In jedem Fall wird der Druckkolben bzw. der positionsgeregelte Druckkolben als Stellglied für die Druckregelung verwendet. Die Ventile der Ventilendstufe (M6) werden nur digital angesteuert.

Die in Figur 6c beschriebene Druckregelung wird vorteilhaft bei der Pedalkraftregelung des Wegsimulators (Figur 4b) eingesetzt, in dem die Pedalkraft über Druckvolumensteuerung bei geöffneten ESV und WA-Ventil eingesetzt wird.

Für alle vorbeschriebenen Ausführungsformen gilt, dass das gestrichelt dargestellte Ventil VST nicht vorhanden sein muss.

## Patentansprüche

1. Bremsanlage für Kraftfahrzeuge, mit
- einem Hauptbremszylinder (HZE) und einem darin angeordneten Schwimmkolben (SK), welcher einen ersten und zweiten Druckraum (DR1, DR2) voneinander abdichtend trennt, wobei der erste Druckraum (DR1) mit einem ersten Bremskreis (BK I) und der zweite Druckraum (DR2) mit einem zweiten Bremskreis (BK II) hydraulisch verbunden ist,
- ein unter Atmosphärendruck stehender Druckmittelvorratsbehälter (6),
- Radbremsen (RB1-RB4),
- einer elektrisch steuerbaren Druckversorgereinrichtung (DE) zum Druckaufbau und Druckabbau in den Radbremsen (RB1-4),
- einem Ventilblock mit einem stromlos offenen Einlassventil/Schaltventil (SV1, SV2, SV3, SV4) für jede Radbremse (RB1-4) und mit mindestens einem Auslassventil (AV1-4),
- jede Radbremse (RB1-4) über das ihr zugeordnete Schaltventil (SV1, SV2, SV3, SV4) mit einer Druckkammer (DR1, DR2) des Hauptbremszylinders (HZE) hydraulisch verbindbar ist und auch direkt oder über Trennventile (TV1, TV2) mit der Druckversorgereinheit (DE) hydraulisch verbunden bzw. verbindbar ist,
wobei jeder Bremskreis (BK I, BK II) mit der Druckversorgereinrichtung (DE) hydraulisch verbunden oder mittels mindestens eines steuerbaren Ventils (TV1, TV2, TV2b) hydraulisch mit der Druckversorgereinrichtung (DE) verbindbar ist,
**dadurch gekennzeichnet, dass** beide Druckräume (DR1, DR2) zumindest im normalen Bremskraftverstärkerbetrieb sowohl beim Druckaufbau als auch beim Druckabbau in mindestens einer Radbremse (RB1, RB2, RB3, RB4) mit einem Druck druckbeaufschlagt sind, der dem von der Druckversorgereinrichtung (DE) erzeugtem Druck entspricht, und dass in Bremssituationen, bei denen die Druckänderung in mindestens einer Radbremse mit hoher Dynamik, insbesondere im ABS/ESP-Betrieb, erfolgen muss, gleichzeitig in mindestens einer Radbremse (RB1, RB2, RB3, RB4) die Druckänderung mittels der Volumensteuerung der Druckversorgereinrichtung (DE) erfolgt und in mindestens einer anderen Radbremse, insbesondere zeitgleich, ein Druckabbau über mindestens ein Auslassventil (AV) erfolgt.

2. Bremsanlage nach Anspruch 1, **dadurch gekennzeichnet, dass**
- die Pedalbetätigungseinheit (1) mit einem Stößel (2) in Verbindung ist, und der Druck im zweiten Druckraum (DR2) auf den Stößel zur Erzeugung einer Pedalrückwirkungskraft (Fp) wirkt und/oder dass die Pedalbetätigungseinheit (1) einen Kolben (HIKO) verstellt, mit dem ein Druck im dritten Druckraum (DR3) erzeugbar ist und/oder
- mittels eines Schaltventils (ESV) der dritte und der zweite Druckraum (DR2, DR3), insbesondere in der Rückfallebene, hydraulisch miteinander verbindbar sind.

3. Bremsanlage nach einem der vorhergehenden Ansprüche, **dadurch gekennzeichnet, dass**
- der Hauptbremszylinder (HZE) einen radial verlaufenden Kanal (SLL) seiner Zylinderwand aufweist, welcher im ersten Druckraum (DR1) mündet, wobei die Mündungsöffnung des Kanals (SLL) vom Schwimmkolben (SK) verschlossen ist, sobald dieser um den Durchmesser der Mündungsöffnung aus seiner Normalstellung heraus verstellt ist, wobei der Kanal (SLL) hydraulisch mit einem Druckraum (9) der Druckversorgereinrichtung (DE) in Verbindung ist, insbesondere ein mechanischer Anschlag (3) im Hauptbremszylinder (HZE) angeordnet ist, wobei eine Feder (4) den Schwimmkolben (SK) in Richtung des Anschlags (3) kraftbeaufschlagt, und dass sich der Schwimmkolben (SK) in seiner Normalstellung befindet, wenn er an dem Anschlag (3) anliegt und/oder
- nur in dem zweiten Bremskreis (BK2) ein Drucksensor (13) zur Ermittlung des Drucks vorgesehen ist, und eine Steuereinrichtung den Druck im ersten Druckraum (DR1) und im ersten Bremskreis (BK1) mittels des gemessenen Phasenstroms des Antriebs (M) der Druckversorgereinrichtung (DE) bestimmt, und die ermittelten Drücke für Diagnosezwecke oder Drucksteuerung verwendet werden.

4. Bremsanlage nach einem der vorhergehenden Ansprüche, **dadurch gekennzeichnet, dass** die Bremsanlage nur ein Auslassventil (AV3) für nur eine Radbremse (RB3) aufweist oder mehreren oder allen Radbremsen (RB1-4) jeweils ein Auslassventil (AV1-4) zugeordnet ist, wobei das Auslassventil (AV1-4) jeweils in einer hydraulischen Verbindungsleitung angeordnet ist, welche die jeweils zugeordnete Radbremse (RB1-4) mit dem Vorratsbehältnis (6) verbindet und die in direkter hydraulischer Verbindung zur die Radbremse (RB1-4) mit dem jeweils zugehörigen Schaltventil (SV1-4) verbindenden hydraulischen Verbindungsleitung ist.

5. Bremsanlage nach einem der vorhergehenden Ansprüche, **dadurch gekennzeichnet, dass**
- ein Druckaufbau oder Druckabbau zumindest in dem ersten Bremskreis (BK1) über zumindest ein geöffnetes Schaltventil (SV1, SV2) durch den Kanal (SLL) in den ersten Druckraum (DR1) sowie über das Schnüffelloch (SL) erfolgt, wobei sich der Schwimmkolben (SK) in seiner Normalstellung befindet und/oder
- ein schaltbares Trennventil (TV1) zur wahlweisen Absperrung der hydraulischen Verbindungsleitung zwischen den Radbremsen (RB1, RB2) des ersten Bremskreises (BK1) und der Druckversorgereinrichtung (DE) angeordnet ist, wobei eine ständige hydraulische Verbindung zwischen dem radialen Kanal (SLL) und der Druckversorgereinrichtung (DE) besteht.

6. Bremsanlage nach Anspruch 4, **dadurch gekennzeichnet, dass** lediglich ein Auslassventil (AV1, AV3) je Bremskreis (BK1, BK2) vorgesehen ist.

7. Bremsanlage nach einem der vorhergehenden Ansprüche, **dadurch gekennzeichnet, dass**
- die die Druckversorgereinrichtung (DE) einen Kolben (8) aufweist, der über ein Getriebe (7), insbesondere einen Kugelgewindetrieb, und einen Elektromotor (M) angetrieben ist, und der Kolben (8) mindestens einen Arbeitsraum (9, SK1, SK2, DHK1, DHK2) begrenzt und/oder
- ein schaltbares Ventil (RFV) in einer hydraulischen Verbindungsleitung (VL8) zu deren wahlweisen Verschließen angeordnet ist, wobei die hydraulische Verbindungsleitung (VL8) einen Arbeitsraum (9, SK1, SK2, DHK1) der Druckversorgereinrichtung (DE) mit einer Speicherkammer (SpK) für Hydraulikmedium verbindet, die insbesondere durch ein Kolbenzylindersystem mit einem Arbeitsraum und einem federbelasteten Kolben gebildet ist, und dass mindestens eine hydraulische Verbindungsleitung (VLRB) vorgesehen ist, welche einen Ausgang eines oder mehrerer Auslassventils bzw. -ventile (AV1-4) mit der Speicherkammer (SpK) verbindet, wobei insbesondere das in der Speicherkammer (SpK) unter Druck gespeicherte Hydraulikmedium zur Befüllung des Arbeitsraums (9, SK1, SK2, DHK1) der Druckversorgereinrichtung (DE) dient
und/oder
- die Druckversorgereinrichtung (DE) einen Stufenkolben (8) aufweist, der zwei Wirkflächen zur axialen Begrenzung zweier Druckräume (SK1, SK2) aufweist, wobei entweder die Druckräume (SK1, SK2) über eine hydraulische Verbindungsleitung (VLShV) miteinander verbunden sind, welche mittels eines schaltbaren Ventils (ShV) verschließbar ist, oder der erste Druckraum (SK1) mittels einer hydraulischen Verbindungsleitung (VL4) mit dem zweiten Bremskreis (BK2) verbunden ist und der zweite Druckraum (SK2) mittels einer hydraulischen Verbindungsleitung (VL3) mit dem ersten Bremskreis (BK1) hydraulisch verbunden ist und in einer oder in beiden hydraulischen Verbindungsleitungen (VL3, VL4) ein schaltbares Ventil (ShV, TV2) zum wahlweisen Verschließen oder Öffnen der hydraulischen Verbindungsleitung (VL3, VL4) angeordnet ist.

8. Bremsanlage nach einem der vorhergehenden Ansprüche, **dadurch gekennzeichnet, dass**
- der Druckabbau über den weggesteuerten Hub des Kolbens (8) der Druckversorgereinrichtung (DE) oder über die Verbindungsleitung einer Druckkammer (DHK1, DHK2) des Doppelhubkolbens (8) mit geöffnetem Ventil (PD1, PD3) in den Vorratsbehälter (6) erfolgt, wobei die Steuerungseinrichtung den im jeweiligen Bremskreis gemessene Druck oder berechneten Druck zur Druckabbausteuerung verwendet und/oder
- der Druckabbau in einer Radbremse (RB1, RB2, RB3, RB4) über eine Druckkammer (SK2, DHK2) in ein Vorratsbehältnis (6) erfolgt, wobei zum Druckabbau die in der hydraulischen Verbindung zwischen der Radbremse und einem Vorratsbehältnis (6) angeordneten Ventile (SV1, SV2, SV3, SV4; ShV, TV2b, PD1, PD3) geöffnet sind, wobei zumindest eines der Ventile bei vorgegebenen Druckabbau geöffnet ist, bei der der Druckabbau in den Bremskreisen über Druckgeber gemessen und gesteuert ist.

9. Bremsanlage nach einem der vorhergehenden Ansprüche, **dadurch gekennzeichnet, dass**
- der Druckabbau über das geöffnete Ventil (PD3) bei Vorhub des Kolbens (8) der Druckversorgereinrichtung (DE) mit entsprechender Ventilschaltung der Ventile (TV2, TV2b, ShV) erfolgt, wobei beim Druckabbau der Druck in den Bremskreisen, insbesondere über einen Druckgeber gemessene Druck, zur Steuerung verwendet wird
und/oder
- während des zeitgesteuerten Druckabbaus in einer anderen Radbremse (RB1-4) ein Druckaufbau mittels volumengesteuerter Druckversorgereinrichtung (DE) erfolgt
und/oder
- der Druckabbau bei hohen Drücken bis zu Drücken in Bereich nahe des Blockierdrucks im Normalbetrieb (200bar->ca. 80-100 bar) über Druck oder Zeitsteuerung des PD3-Ventil bei optional gleichzeitig oder zeitlich versetzten Wegsteuerung des Doppelhubkolbens im Vorhubbetrieb und nachfolgenden Druckabbau bis zum Atmosphärendruck über Druckvolumensteuerung im Rückhubbetrieb des Doppelhubkolbens erfolgt.

10. Bremsanlage nach einem der vorhergehenden Ansprüche, **dadurch gekennzeichnet, dass** ein oder mehrere Sperrelemente (SE) vorgesehen sind, die zur Arretierung des Schwimmkolbens (SK) des Hauptbremszylinders (HZE) dienen oder mittels derer in der Rückfallebene oder bei speziellen Funktionen im ABS-Betrieb die hydraulischen Verbindungen zwischen dem zweitem Druckraum (DR2) und der Druckversorgereinrichtung (DE) einerseits und zwischen dem erstem Druckraum (DR1) und dem erstem Bremskreis (BK1) andererseits unterbrechbar sind.

11. Bremsanlage nach einem der vorhergehenden Ansprüche, **dadurch gekennzeichnet, dass**
- der Kolben (8) der Druckversorgereinrichtung (DE) zwei Druckräume (DHK1, DHK2) voneinander abdichtend trennt, wobei beide Druckräume (DHK1, DHK2) mit dem einen oder anderen Bremskreis (BK1, BK2) mittels der Schaltventile und/oder über den Hauptbremszylinder (HZE) zum Druck auf- oder Druckabbau verbindbar sind insbesondere die beiden Druckräume (DHK1, DHK2) hydraulisch mittels den Verbindungsleitungen (VL4, VL7) verbindbar sind und ein Druckausgleich, insbesondere zur Druckregelung mit unterschiedlichen hydraulischen Wirkflächen und Positionierung des Doppelhubkolbens (8), zwischen den Druckräumen (DHK1, DHK2) durch Öffnen der in diesen Leitungen angeordneten Ventile (TV2, TV2b, ShV) erfolgt.

12. Bremsanlage nach einem der vorhergehenden Ansprüche, **dadurch gekennzeichnet, dass**
- das im zweiten Druckraum (DR2) unter Druck stehende Hydraulikmedium eine axiale Kraft auf den in den zweiten Druckraum (DR2) hineinragenden Stößel (2) und damit auf das Bremspedal (1) ausübt, wobei über die Steuerung des Drucks in dem zweiten Druckraum (DR2) die auf das Bremspedal (1) wirkende Rückstellungskraft (Fp) steuerbar bzw. regelbar oder mittels Verschließen des Trennventils (VST) abschaltbar ist
insbesondere
- der dritte Druckraum (DR3) mittels einer hydraulischen Verbindungsleitung (VLW) mit dem Vorratsbehältnis (6) in Verbindung ist, wobei in diese Verbindungsleitung (VLW) mittels eines, insbesondere stromlos geschlossenen, Trennventils (WA) verschließbar ist, insbesondere der Stößel (2) einen Durchmesser kleiner als 10mm, bevorzugt zwischen 9mm und 3mm, insbesondere 5mm, aufweist.

13. Bremsanlage nach einem der vorhergehenden Ansprüche, **dadurch gekennzeichnet, dass** der Hauptbremszylinder (HZE) eine erste Kolbenzylindereinheit mit einem Kolben (SK) aufweist, wobei der Kolben (SK) die beiden Druckräume (DR1, DR2) voneinander abdichtend trennt und an dem Kolben (SK) ein Stößel (ST2) befestigt oder angeformt ist, dessen freies Ende (ST2e) aus dem Zylindergehäuse (G) herausragt und das Bremspedal (1) mit einem Stößel (ST1) mechanisch in Verbindung ist, wobei das freie Ende (ST1e) des Stößels (ST1) in einem Abstand (LW) zu dem freien Ende (ST2e) des anderen Stößels (ST2) gehalten wird, und in der Rückfallebene der Stößel (ST1) den Stößel (ST2) verstellt.

14. Bremsanlage nach einem der vorhergehenden Ansprüche, **dadurch gekennzeichnet, dass** ein Druckaufbau in einem Bremskreis und ein Druckabbau in dem anderen Bremskreis mittels beider Kammern des Doppelhubkolbens (8) gleichzeitig erfolgt, wobei die Druckänderung in zumindest einer Radbremse mittels Wegsteuerung (ds) bzw. Volumensteuerung des Doppelhubkolbens (8) und die entsprechende Steuerung der Schaltventile SV1-SV4 und/oder PD1 bzw. PD3 erfolgt.

15. Bremsanlage nach einem der vorhergehenden Ansprüche, **dadurch gekennzeichnet, dass** ein spezielles auf Durchflussströmung von der Druckerzeugeinheit (DE) zum Vorratsbehälter (6) schließbares Ventil (VD) zur Diagnose der Dichtungen zwischen Druckraum (DR2) und (DR3) sowie des Wegsimulatorkolbens mittels Drucksteuerung durch Druckerzeugereinheit (DE) verwendet wird.

16. Bremsanlage nach einem der vorhergehenden Ansprüche, **dadurch gekennzeichnet, dass**
- die Steuerungseinrichtung den Volumenhaushalt der Bremskreise überwacht und durch entsprechende Wegsteuerung des Kolbens ein Anschlagen des Kolbens (8) der Steuerungseinrichtung an einen axialen Anschlag des Zylinders der Druckversorgereinrichtung (DE) verhindert und/oder
- die Dichtungsfunktion des Schwimmkolbens (SK) bei Fahrzeugstillstand überprüft, wobei sie den vorhandenen Bremsdruck im Druckraum (DR1, DR2) ohne weitere Verstellung des Kolbens (8) der Druckversorgereinrichtung (DE) nutzt
- bei ABS-Betrieb der Schwimmkolben (SK) des Hauptbremszylinders (HZE) mittels eines Positionssensors oder über die Auswertung der Volumenförderung durch entsprechende Schaltung der Ventile (TV2, TV2b, ShV) in eine Position verstellbar ist.

17. Bremsanlage nach einem der vorhergehenden Ansprüche, **dadurch gekennzeichnet, dass** die Trennventile (TV1, TV2, TV2b) auf hohe Durchflüsse und geringe Differenzdrücke ausgelegt sind, insbesondere die Steuerungseinheit mittels der Druckversorgereinrichtung (DE) vor oder während dem Öffnen eines Trennventils (TV1, TV2, TV2b) einen Druck im entsprechenden Druckraum (9, DHK1, DHK2) mittels Verstellen des Kolbens (8) erzeugt, der so groß ist, dass sich an dem zu öffnenden Trennventil (TV1, TV2, TV2b) ein hinreichend kleiner Differenzdruck einstellt.

## Claims

1. Brake system for motor vehicles, having
- a master brake cylinder (HZE) and a floating piston (SK) arranged therein, which separates a first and a second pressure chamber (DR1, DR2) from one another in a sealing manner, the first pressure chamber (DR1) being hydraulically connected to a first brake circuit (BK I) and the second pressure chamber (DR2) being hydraulically connected to a second brake circuit (BK II)
- a pressure fluid reservoir (6) under atmospheric pressure,
- wheel brakes (RB1-RB4),
- an electrically controllable pressure supply device (DE) for pressurizing and depressurizing the wheel brakes (RB1-4)
- a valve block with a de-energized open inlet valve/switching valve (SV1, SV2, SV3, SV4) for each wheel brake (RB1-4) and with at least one outlet valve (AV1-4),
- each wheel brake (RB1-4) being hydraulically connectable to a pressure chamber (DR1, DR2) of the master brake cylinder (HZE) via the corresponding switching valve (SV1, SV2, SV3, SV4) and also being hydraulically connected or connectable to the pressure supply unit (DE) directly or via separating valves (TV1, TV2),
each brake circuit (BK I, BK II) being hydraulically connected to the pressure supply unit (DE) or being hydraulically connectable to the pressure supply unit (DE) by means of at least one controllable valve (TV1, TV2, TV2b), **characterized in that** both pressure chambers (DR1, DR2) are pressurized, at least in normal brake booster operation, both during pressure build-up and pressure reduction in at least one wheel brake (RB1, RB2, RB3, RB4) with a pressure which corresponds to the pressure generated by the pressure supply device (DE), and **in that** in braking situations, in which the pressure change must take place in at least one wheel brake with high dynamics, in particular in ABS/ESP operation, the pressure change takes place simultaneously in at least one wheel brake (RB1, RB2, RB3, RB4) by means of the volume control of the pressure supply device (DE) and a pressure reduction takes place in at least one other wheel brake, in particular simultaneously, via at least one outlet valve (AV).

2. Brake system according to claim 1, **characterized in that**
- the pedal actuation unit (1) is in connection with a plunger (2) and the pressure in the second pressure chamber (DR2) acts on the plunger for generating a pedal response force (Fp) and/or **in that** the pedal actuation unit (1) displaces a piston (HIKO), with which a pressure can be generated in the third pressure chamber (DR3)
and/or
- by means of a switching valve (ESV), the third and the second pressure chambers (DR2, DR3), in particular in the fallback level, can be hydraulically connected to each other.

3. Brake system according to one of the preceding claims, **characterized in that**
- the master brake cylinder (HZE) has a radial channel (SLL) of its cylinder wall, which joins in the first pressure chamber (DR1), with the orifice of the channel (SLL) being closed by the floating piston (SK) as soon as the latter is displaced from its normal position by the diameter of the orifice of the channel (SLL) being hydraulically connected to a pressure chamber (9) of the pressure supply device (DE), in particular a mechanical stop (3) is arranged in the master cylinder (HZE), wherein a spring (4) pressurizes the floating piston (SK) in the direction of the stop (3), and **in that** the floating piston (SK) is in its normal position when it is in contact with the stop (3)
and/or
- only in the second brake circuit (BK2) a pressure sensor (13) is provided for determining the pressure, and a control device measures the pressure in the first pressure chamber (DR1) and in the first brake circuit (BK1) by means of the measured phase current of the drive (M) of the pressure supply unit (DE), and the determined pressures are used for diagnostic purposes or pressure control.

4. Brake system according to one of the preceding claims, **characterized in that** the brake system has only one outlet valve (AV3) for only one wheel brake (RB3) or that several or all wheel brakes (RB1-4) are each assigned an outlet valve (AV1-4), the outlet valve (AV1-4) being arranged in each case in a hydraulic connecting line which connects the respectively assigned wheel brake (RB1-4) to the reservoir (6) and which is in direct hydraulic connection to the hydraulic connecting line connecting the wheel brake (RB1-4) to the respectively assigned shift valve (SV1-4).

5. Brake system according to one of the preceding claims, **characterized in that**
- a pressure build-up or pressure reduction at least in the first brake circuit (BK1) is carried out via at least one open switching valve (SV1, SV2) through the channel (SLL) into the first pressure chamber (DR1) as well as via the sniffer hole (SL) with the floating piston (SK) being in its normal position and/or
- a switchable isolating valve (TV1) for selectively shutting off the hydraulic connecting line is arranged between the wheel brakes (RB1, RB2) of the first brake circuit (BK1) and the pressure supply device (DE), whereby there is a permanent hydraulic connection between the radial channel (SLL) and the pressure supply device (DE).

6. Brake system according to claim 4, **characterized in that** only one outlet valve (AV1, AV3) is provided per brake circuit (BK1, BK2).

7. Brake system according to one of the preceding claims, **characterized in that**
- the pressure supply device (DE) has a piston (8), which is driven via a gear unit (7), in particular a ball screw, and an electric motor (M), and the piston (8) limits at least one working chamber (9, SK1, SK2, DHK1, DHK2)
and/or
- a switchable valve (RFV) is arranged in a hydraulic connecting line (VL8) for the selective closure thereof, wherein the hydraulic connecting line (VL8) connects a working chamber (9, SK1, SK2, DHK1) of the pressure supply device (DE) with a storage chamber (SpK) for hydraulic medium, which is in particular formed by a piston cylinder system with a working chamber and a springloaded piston, and **in that** at least one hydraulic connection line (VLRB) is provided, which connects an outlet of one or several outlet valve or valves (AV1-4) to the storage chamber (SpK), whereby in particular the hydraulic medium stored under pressure in the storage chamber (SpK) serves for filling the working chamber (9, SK1, SK2, DHK1) of the pressure supply device (DE) and/or
- the pressure supply device (DE) has a stepped piston (8) which has two effective surfaces for axial delimitation of two pressure chambers (SK1, SK2), wherein either the pressure chambers (SK1, SK2) are connected via a hydraulic connecting line (VLShV), which can be closed by means of a switchable valve (ShV), or the first pressure chamber (SK1) is connected with the second brake circuit (BK2) by means of a hydraulic connecting line (VL4), and the second pressure chamber (SK2) is connected with the first brake circuit (BK1) by means of hydraulic connecting line (VL3), and a switchable valve (ShV TV2) for selectively closing or opening the hydraulic connecting line (VL3, VL4) is arranged in one or in both hydraulic connecting lines (VL3, VL4).

8. Brake system according to one of the preceding claims, **characterized in that**
- the pressure reduction takes place via the path-controlled stroke of the piston (8) of the pressure supply device (DE) or via the connecting line of a pressure chamber (DHK1, DHK2) of the double-stroke piston (8) with an open valve (PD1, PD3) into the reservoir (6), whereby the control device uses the measured pressure or calculated pressure for pressure reduction control and/or
- the pressure reduction in a wheel brake (RB1, RB2, RB3, RB4) takes place via a pressure chamber (SK2, DHK2) into a reservoir (6), wherein the valves (SV1, SV2, SV3, SV4; ShV, TV2b, PD1, PD3) arranged in the hydraulic connection between the wheel brake and a reservoir (6) are opened for pressure reduction, with at least one of the valves is opened at a predetermined pressure reduction at which the pressure reduction in the brake circuits is measured and controlled via pressure transducers.

9. Brake system according to one of the preceding claims, **characterized in that**
- the pressure is reduced via the open valve (PD3) during the prestroke of the piston (8) of the pressure supply device (DE) with corresponding switching of the valves (TV2, TV2b, ShV2), with the pressure in the brake circuits, in particular the pressure measured via a pressure transducer, is used for control during the pressure reduction
and/or
- during the time-controlled pressure reduction, pressure is built up by means of a volume-controlled pressure-supply device (DE) in another wheel brake (RB1-4)
and/or
- the pressure reduction takes place at high pressures up to pressures in the range close to the blocking pressure in normal operation (200bar->approx. 80-100 bar) via pressure or time control of the PD3-valve with optional simultaneous or time-shifted path control of the double-stroke piston in pre-stroke operation and subsequent pressure reduction down to atmospheric pressure via pressure- volume control in the return stroke operation of the double-stroke piston.

10. Brake system according to one of the preceding claims, **characterized in that** one or more locking elements (SE) are provided which serve to lock the floating piston (SK) of the master brake cylinder (HZE) or by means of which the hydraulic connections between the second pressure chamber (DR2) and the pressure supply device (DE), on the one hand, and between the first pressure chamber (DR1) and the first brake circuit (BK1), on the other hand, can be interrupted in the fallback level or in the case of special functions in ABS mode.

11. Brake system according to one of the preceding claims, **characterized in that**
the piston (8) of the pressure supply device (DE) separates two pressure chambers (DHK1, DHK2) from each other in a sealing manner, wherein both pressure chambers (DHK1, DHK2) are connectable with one or the other brake circuit (BK1, BK2) by means of the switching valves and/or via the master brake cylinder (HZE) to build up or reduce pressure in particular the two pressure chambers (DHK1, DHK2) can be connected hydraulically by means of the connecting lines (VL4, VL7) and a pressure equalization takes place, in particular for pressure control with different hydraulic effective surfaces and positioning of the double-stroke piston (8) between the pressure chambers (DHK1, DHK2) by opening the valves (TV2, VL7) arranged in these lines.

12. Brake system according to one of the preceding claims, **characterized in that**
- the pressurized hydraulic medium in the second pressure chamber (DR2) exerts an axial force on the plunger (2) projecting into the second pressure chamber (DR2) and thus on the brake pedal (1), wherein via the control of the pressure in the second pressure chamber (DR2) the restoring force (Fp) acting on the brake pedal (1) being controllable or adjustable or can be switched off by closing the isolating valve (VST)
in particular
- the third pressure chamber (DR3) is connected with the reservoir (6) by means of a hydraulic connecting line (VLW), whereby this connecting line (VLW) is closeable by means of a, in particular de-energized open, separating valve (WA), in particular the plunger (2) having a diameter smaller than 10 mm, preferably between 9 mm and 3 mm, in particular 5 mm.

13. Brake system according to one of the preceding claims, **characterized in that** the master brake cylinder (HZE) has a first piston-cylinder unit with a piston (SK), the piston (SK) separating the two pressure chambers (DR1, DR2) from each other in a sealing manner and a plunger (ST2) being attached to or integrally formed on the piston (SK), the free end (ST2e) of which projects out of the cylinder housing (G) and the brake pedal (1) is mechanically connected to a plunger (ST1), the free end (ST1e) of the plunger (ST1) being held at a distance (LW) from the free end (ST2e) of the other plunger (ST2), and the plunger (ST1) adjusts the plunger (ST2) in the fallback level.

14. Brake system according to one of the preceding claims, **characterized in that** a pressure build-up in one brake circuit and a pressure reduction in the other brake circuit takes place simultaneously by means of both chambers of the double-stroke piston (8), the pressure change in at least one wheel brake takes place by means of path control (ds) or volume control of the double-stroke piston (8) and the corresponding control of the switching valves SV1-SV4 and/or PD1 or PD3.

15. Brake system according to one of the preceding claims, **characterized in that** a special valve (VD) closable to flow from the pressure generator unit (DE) to the reservoir (6) is used to diagnose the seals between the pressure chamber (DR2) and (DR3) and the path simulator piston by means of pressure control by pressure generator unit (DE).

16. Brake system according to one of the preceding claims, **characterized in that**
- the control device monitors the volume balance of the brake circuits and, prevents an axial stop of the piston of the pressure supply device (DE) by appropriate path control of the piston
and/or
- checks the sealing function of the floating piston (SK) when the vehicle is at a standstill, using the existing brake pressure in the pressure chamber (DR1, DR2) without further adjustment of the piston (8) of the pressure supply device (DE)
- during ABS operation, the floating piston (SK) of the master brake cylinder (HZE) can be adjusted to a position by means of a position sensor or via evaluation of the volume delivery by corresponding switching of the valves (TV2, TV2b, ShV).

17. Brake system according to one of the preceding claims, **characterized in that** the isolating valves (TV1, TV2, TV2b) are designed for high flow rates and low differential pressures, in particular the control unit generates a pressure in the corresponding pressure chamber (9, DHK1, DHK2) before or during the opening of an isolating valve (TV1, TV2, TV2b) by means of the pressure supply device (DE), adjusting the piston (8), which is so great that a sufficiently small differential pressure is established at the separating valve (TV1, TV2, TV2b) to be opened.

## Revendications

1. Système de freinage pour véhicules automobiles, avec
- un maître-cylindre de frein (HZE) et un piston secondaire (SK) disposé dans celui-ci, lequel sépare une première et deuxième chambre de pression (DR1, DR2) l'une de l'autre de manière étanche, dans lequel la première chambre de pression (DR1) est reliée de manière hydraulique à un premier circuit de freinage (BK I) et la deuxième chambre de pression (DR2) à un deuxième circuit de freinage (BK II),
- un réservoir de fluide sous pression (6) sous pression atmosphérique,
- des freins de roue (RB1-RB4),
- un dispositif d'alimentation en pression (DE) pouvant être commandé électriquement pour la montée en pression et réduction de pression dans les freins de roue (RB1-4),
- un bloc de soupapes avec une soupape d'admission/soupape de commutation (SV1, SV2, SV3, SV4) ouverte sans courant pour chaque frein de roue (RB1-4) et avec au moins une soupape d'évacuation (AV1-4),
- chaque frein de roue (RB1-4) peut être relié de manière hydraulique à une chambre de pression (DR1, DR2) du maître-cylindre de frein (HZE) par l'intermédiaire de la soupape de commutation (SV1, SV2, SV3, SV4) associée à celui-ci et est également relié ou peut être relié de manière hydraulique à l'unité d'alimentation en pression (DE) de façon directe ou par l'intermédiaire de soupapes de séparation (TV1, TV2),
dans lequel chaque circuit de freinage (BK I, BK II) est relié de manière hydraulique au dispositif d'alimentation en pression (DE) ou peut être relié de manière hydraulique au dispositif d'alimentation en pression (DE) au moyen d'au moins une soupape (TV1, TV2, TV2b) commandable,
**caractérisé en ce que** les deux chambres de pression (DR1, DR2) au moins dans le mode normal servofrein aussi bien lors de la montée en pression que lors de la réduction de pression dans au moins un frein de roue (RB1, RB2, RB3, RB4) peuvent être soumises en pression avec une pression qui correspond à la pression produite par le dispositif d'alimentation en pression (DE), et que dans des situations de freinage, pour lesquelles le changement de pression dans au moins un frein de roue doit s'effectuer avec une dynamique élevée, en particulier dans le mode ABS/ESP, le changement de pression s'effectue simultanément dans au moins un frein de roue (RB1, RB2, RB3, RB4) au moyen de la commande de volume du dispositif d'alimentation en pression (DE) et une réduction de pression s'effectue dans au moins un autre frein de roue, en particulier simultanément, par l'intermédiaire d'au moins une soupape d'évacuation (AV).

2. Système de freinage selon la revendication 1, **caractérisé en ce que**
- l'unité d'actionnement de pédale (1) est en liaison avec un poussoir (2), et la pression dans la deuxième chambre de pression (DR2) agit sur le poussoir pour produire une force de réaction de pédale (Fp) et/ou que l'unité d'actionnement de pédale (1) déplace un piston (HIKO) avec lequel une pression peut être produite dans la troisième chambre de pression (DR3)
et/ou
- la troisième et la deuxième chambre de pression (DR2, DR3) peuvent être reliées l'une à l'autre de manière hydraulique, en particulier dans la situation de secours, au moyen d'une soupape de commutation (ESV).

3. Système de freinage selon l'une quelconque des revendications précédentes, **caractérisé en ce que**
- le maître-cylindre de frein (HZE) présente un canal (SLL) s'étendant radialement de sa paroi cylindrique, lequel débouche dans la première chambre de pression (DR1), dans lequel l'ouverture d'embouchure du canal (SLL) est fermée par le piston secondaire (SK), dès que celui-ci est déplacé hors de sa position normale du diamètre de l'ouverture d'embouchure, dans lequel le canal (SLL) est en liaison de manière hydraulique avec une chambre de pression (9) du dispositif d'alimentation en pression (DE), en particulier une butée mécanique (3) est disposée dans le maître-cylindre de frein (HZE), dans lequel un ressort (4) soumet le piston secondaire (SK) en direction de la butée (3) à l'effet d'une force, et que le piston secondaire (SK) se trouve dans sa position normale, lorsqu'il s'applique sur la butée (3)
et/ou
- un capteur de pression (13) pour déterminer la pression est prévu uniquement dans le deuxième circuit de freinage (BK2), et un dispositif de commande détermine la pression dans la première chambre de pression (DR1) et dans le premier circuit de freinage (BK1) au moyen du courant de phase mesuré de l'entraînement (M) du dispositif d'alimentation en pression (DE), et les pressions déterminées sont utilisées aux fins de diagnostic ou pour une commande de pression.

4. Système de freinage selon l'une quelconque des revendications précédentes, **caractérisé en ce que** le système de freinage présente une seule soupape d'évacuation (AV3) pour un seul frein de roue (RB3) ou respectivement une soupape d'évacuation (AV1―4) est associée à plusieurs ou à tous les freins de roue (RB1―4), dans lequel la soupape d'évacuation (AV1―4) est disposée respectivement dans une conduite de liaison hydraulique, laquelle relie le frein de roue (RB1―4) respectivement associé au réservoir (6) et qui est en liaison hydraulique directe par rapport à la conduite de liaison hydraulique reliant le frein de roue (RB1-4) à la soupape de commutation (SV1―4) respectivement associée.

5. Système de freinage selon l'une quelconque des revendications précédentes, **caractérisé en ce que**
― une montée en pression ou réduction de pression s'effectue au moins dans le premier circuit de freinage (BK1) par l'intermédiaire d'au moins une soupape de commutation (SV1, SV2) ouverte par le canal (SLL) dans la première chambre de pression (DR1) ainsi que par l'intermédiaire du trou de reniflage (SL), dans lequel le piston secondaire (SK) se trouve dans sa position normale
et/ou
― une soupape de séparation (TV1) pouvant être commutée pour la coupure sélective de la conduite de liaison hydraulique est disposée entre les freins de roue (RB1, RB2) du premier circuit de freinage (BK1) et le dispositif d'alimentation en pression (DE), dans lequel une liaison hydraulique permanente est présente entre le canal (SLL) radial et le dispositif d'alimentation en pression (DE).

6. Système de freinage selon la revendication 4, **caractérisé en ce que** seule une soupape d'évacuation (AV1, AV3) est prévue par circuit de freinage (BK1, BK2).

7. Système de freinage selon l'une quelconque des revendications précédentes, **caractérisé en ce que**
― le dispositif d'alimentation en pression (DE) présente un piston (8), qui est entraîné par l'intermédiaire d'une transmission (7), en particulier d'un mécanisme de vis-écrou à billes, et d'un moteur électrique (M), et le piston (8) délimite au moins une chambre de travail (9, SK1, SK2, DHK1, DHK2).
et/ou
― une soupape (RFV) pouvant être commutée est disposée dans une conduite de liaison hydraulique (VL8) pour la fermeture sélective de celle-ci, dans lequel la conduite de liaison hydraulique (VL8) relie une chambre de travail (9, SK1, SK2, DHK1) du dispositif d'alimentation en pression (DE) à une chambre de stockage (SpK) pour le milieu hydraulique, qui est formée en particulier par un système de cylindre de piston avec une chambre de travail et un piston sollicité par un ressort, et qu'au moins une conduite de liaison hydraulique (VLRB) est prévue, laquelle relie une sortie d'une ou plusieurs soupape ou soupapes d'évacuation (AV1―4) à la chambre de stockage (SpK), dans lequel en particulier le milieu hydraulique stocké sous pression dans la chambre de stockage (SpK) sert au remplissage de la chambre de travail (9, SK1, SK2, DHK1) du dispositif d'alimentation en pression (DE)
et/ou
― le dispositif d'alimentation en pression (DE) présente un piston à gradins (8), qui présente deux surfaces actives pour la délimitation axiale de deux chambres de pression (SK1, SK2), dans lequel soit les chambres de pression (SK1, SK2) sont reliées l'une à l'autre par l'intermédiaire d'une conduite de liaison hydraulique (VLShV), laquelle peut être fermée au moyen d'une soupape (ShV) pouvant être commutée, soit la première chambre de pression (SK1) est reliée au deuxième circuit de freinage (BK2) au moyen d'une conduite de liaison hydraulique (VL4) et la deuxième chambre de pression (SK2) est reliée de manière hydraulique au premier circuit de freinage (BK1) au moyen d'une conduite de liaison hydraulique (VL3) et une soupape (ShV, TV2) pour la fermeture ou l'ouverture sélective de la conduite de liaison hydraulique (VL3, VL4) est disposée dans une ou dans les deux conduites de liaison hydraulique (VL3, VL4).

8. Système de freinage selon l'une quelconque des revendications précédentes, **caractérisé en ce que**
― la réduction de pression s'effectue par l'intermédiaire de la course à trajet commandé du piston (8) du dispositif d'alimentation en pression (DE) ou par l'intermédiaire de la conduite de liaison d'une chambre de pression (DHK1, DHK2) du piston à double course (8) avec la soupape (PD1, PD3) ouverte dans le réservoir (6), dans lequel le dispositif de commande utilise la pression mesurée dans le circuit de freinage respectif ou la pression calculée pour la commande de réduction de pression
et/ou
― la réduction de pression dans un frein de roue (RB1, RB2, RB3, RB4) s'effectue par l'intermédiaire d'une chambre de pression (SK2, DHK2) dans un réservoir (6), dans lequel pour la réduction de pression les soupapes (SV1, SV2, SV3, SV4 ; ShV, TV2b, PD1, PD3) disposées dans la liaison hydraulique entre le frein de roue et un réservoir (6) sont ouvertes, dans lequel au moins une des soupapes est ouverte lors d'une réduction de pression prédéfinie, pour laquelle la réduction de pression dans les circuits de freinage est mesurée et commandée par l'intermédiaire de transducteurs de pression.

9. Système de freinage selon l'une quelconque des revendications précédentes, **caractérisé en ce que**
― la réduction de pression s'effectue par l'intermédiaire de la soupape (PD3) ouverte lors d'une précourse du piston (8) du dispositif d'alimentation en pression (DE) avec une commutation de soupape correspondante des soupapes (TV2, TV2b, ShV), dans lequel lors de la réduction de pression la pression
dans les circuits de freinage, en particulier la pression mesurée par l'intermédiaire d'un transducteur de pression, est utilisée pour la commande
et/ou
― pendant la réduction de pression commandée dans le temps dans un autre frein de roue (RB1―4), une montée en pression s'effectue au moyen d'un dispositif d'alimentation en pression (DE) commandé en volume
et/ou
― la réduction de pression s'effectue pour des pressions élevées allant jusqu'à des pressions dans la plage proche de la pression de blocage dans le mode normal (200 bar->environ 80-100 bar) par l'intermédiaire d'une commande de pression ou de temps de la soupape PD3 pour une commande de trajet éventuellement simultanée ou décalée dans le temps du piston à double course dans le mode précourse et d'une réduction de pression subséquente jusqu'à la pression atmosphérique par l'intermédiaire d'une commande de volume de pression dans le mode course de retour du piston à double course.

10. Système de freinage selon l'une quelconque des revendications précédentes, **caractérisé en ce qu'**un ou plusieurs éléments de blocage (SE) sont prévus, qui servent à arrêter le piston secondaire (SK) du maître-cylindre de frein (HZE) ou au moyen desquels dans la situation de secours ou pour des fonctions spéciales dans le mode ABS, les liaisons hydrauliques entre la deuxième chambre de pression (DR2) et le dispositif d'alimentation en pression (DE) d'une part et entre la première chambre de pression (DR1) et le premier circuit de freinage (BK1) d'autre part peuvent être interrompues.

11. Système de freinage selon l'une quelconque des revendications précédentes, **caractérisé en ce que**
― le piston (8) du dispositif d'alimentation en pression (DE) sépare deux chambres de pression (DHK1, DHK2) l'une de l'autre de manière étanche, dans lequel les deux chambres de pression (DHK1, DHK2) peuvent être reliées à l'un des ou à l'autre circuit de freinage (BK1, BK2) au moyen des soupapes de commutation et/ou par l'intermédiaire du maître-cylindre de frein (HZE) pour la montée en pression ou la réduction de pression
en particulier les deux chambres de pression (DHK1, DHK2) peuvent être reliées de manière hydraulique au moyen des conduites de liaison (VL4, VL7) et une compensation de pression, en particulier pour la régulation de pression avec des surfaces actives hydrauliques différentes et le positionnement du piston à double course (8), s'effectue entre les chambres de pression (DHK1, DHK2) par ouverture des soupapes (TV2, TV2b, ShV) disposées dans ces conduites.

12. Système de freinage selon l'une quelconque des revendications précédentes, **caractérisé en ce que**
― le milieu hydraulique sous pression dans la deuxième chambre de pression (DR2) exerce une force axiale sur le poussoir (2) faisant saillie dans la deuxième chambre de pression (DR2) et ainsi sur la pédale de frein (1), dans lequel la force de rappel (Fp) agissant sur la pédale de frein (1) peut être commandée ou régulée par l'intermédiaire de la commande de la pression dans la deuxième chambre de pression (DR2) ou peut être interrompue au moyen d'une fermeture de la soupape de séparation (VST)
en particulier
― la troisième chambre de pression (DR3) est en liaison avec le réservoir (6) au moyen d'une conduite de liaison hydraulique (VLW), dans lequel dans cette conduite de liaison (VLW) peut être fermée au moyen d'une soupape de séparation (WA), en particulier fermée sans courant, en particulier le poussoir (2) présente un diamètre inférieur à 10 mm, de préférence compris entre 9 mm et 3 mm, en particulier de 5 mm.

13. Système de freinage selon l'une quelconque des revendications précédentes, **caractérisé en ce que** le maître-cylindre de frein (HZE) présente une première unité de cylindre à piston avec un piston (SK), dans lequel le piston (SK) sépare les deux chambres de pression (DR1, DR2) l'une de l'autre de manière étanche et un poussoir (ST2) est fixé ou formé sur le piston (SK), dont l'extrémité libre (ST2e) fait saillie du carter de cylindre (G) et la pédale de frein (1) est mécaniquement en liaison avec un poussoir (ST1), dans lequel l'extrémité libre (ST1e) du poussoir (ST1) est retenue à une distance (LW) de l'extrémité libre (ST2e) de l'autre poussoir (ST2), et dans la situation de secours, le poussoir (ST1) déplace le poussoir (ST2).

14. Système de freinage selon l'une quelconque des revendications précédentes, **caractérisé en ce qu'**une montée en pression dans un circuit de freinage et une réduction de pression dans l'autre circuit de freinage s'effectue simultanément au moyen des deux chambres du piston à double course (8), dans lequel le changement de pression dans au moins un frein de roue s'effectue au moyen d'une commande de trajet (ds) ou commande de volume du piston à double course (8) et de la commande correspondante des soupapes de commutation SV1-SV4 et/ou PD1 ou PD3.

15. Système de freinage selon l'une quelconque des revendications précédentes, **caractérisé en ce qu'**une soupape (VD) spéciale pouvant être fermée à un écoulement en continu à partir de l'unité de production de pression (DE) vers le réservoir (6) est utilisée pour le diagnostic des joints entre la chambre de pression (DR2) et (DR3) ainsi que du piston de simulateur de course au moyen d'une commande de pression par l'unité de production de pression (DE).

16. Système de freinage selon l'une quelconque des revendications précédentes, **caractérisé en ce que**
― le dispositif de commande surveille la gestion de volume des circuits de freinage et, par une commande de course correspondante du piston, empêche une venue en butée du piston (8) du dispositif de commande contre une butée axiale du cylindre du dispositif d'alimentation en pression (DE)
et/ou
― contrôle la fonction d'étanchéité du piston secondaire (SK) lorsque le véhicule est à l'arrêt, dans lequel il utilise la pression de freinage présente dans la chambre de pression (DR1, DR2) sans déplacement supplémentaire du piston (8) du dispositif d'alimentation en pression (DE)
― pour le mode ABS, le piston secondaire (SK) du maître-cylindre de frein (HZE) peut être déplacé dans une position au moyen d'un capteur de position ou par l'intermédiaire de l'évaluation du transport de volume par une commutation correspondante des soupapes (TV2, TV2b, ShV).

17. Système de freinage selon l'une quelconque des revendications précédentes, **caractérisé en ce que** les soupapes de séparation (TV1, TV2, TV2b) sont adaptées à des débits élevés et de faibles différences de pression, en particulier l'unité de commande produit au moyen du dispositif d'alimentation en pression (DE) avant ou pendant l'ouverture d'une soupape de séparation (TV1, TV2, TV2b) une pression dans la chambre de pression (9, DHK1, DHK2) correspondante au moyen du déplacement du piston (8), qui est si importante qu'une différence de pression suffisamment petite est obtenue sur la soupape de séparation (TV1, TV2, TV2b) à ouvrir.
